# EUROPEAN PATENT APPLICATION

(11) **EP 4 613 644 A1**
(43) Date of publication of application: **10.09.2025**
(21) Application number: 24161683.8
(22) Date of filing: 06.03.2024
(51) Int. Cl.: B64C 33/00, B64C 3/38, B64C 33/02

(54) **AIRCRAFT PROPULSION SYSTEM**

(71) Applicant: Filipowski, Szymon, 31-419 Krakow (PL)
(72) Inventor: Filipowski, Szymon, 31-419 Krakow (PL)

(57) **Abstract**

The subject of the application is a set of technical solutions ensuring extremely efficient drive along with flight control and stabilization performed mechanically and by an electronic flight control and stabilization system in an aircraft heavier than air, which is most similar to an ornithopter. The invention includes a base variant, which is based on the mechanism (12) taking part in transmission of drive to the wing (1) with the basic flight stabilization by an additional stabilizing wing (9) and an electronic stabilizer (10) influencing control surfaces (11), and five subsequent mechanical expansion variants, which bring further functionalities to the invention, responding to problems related to propulsion, stabilization and control of the flight. The last expansion variant, being an electronic control system - key expansion of the base variant in the embodiment and other expansions, allowing the system operation to be fully optimized in terms of energy effectiveness and flight stabilization, and acquisition of energy from the airflow around the wing (1), and executing various flight modes.
Strictly speaking and treating it as the base variant, the drive transmission mechanism (12) from the motor (7) onto the wing (1) is a flat bar system, consisting of basically four bars with articulated joints with the first degree of freedom, driven with the crank (5), whose work in the vertical direction (Z) translates through the connecting-rod (4) and the lever (3) into a vertical (Z) movement of the wing (1), and the work of the crank (5) in the horizontal direction (X) translates through the stick (6) into a change in angles of attack (α2,β2) of the wing (1). A change in the connecting-rod (4) angle causes a change in the wing (1) angle (α2, β2), as this movement of the connecting-rod is transmitted to the wing (1) with a quadrilateral, which can be a parallelogram, or can be slightly modified in order to modify the position of angles and settings of angles in the extreme top and bottom position of the wing (1). The desired difference of the angles (α2, β2), such that the angle of attack (α2) when lowering the wing (1) is smaller than when raising, is achieved thanks to the difference of horizontal (X) inclination of the crank (5) and the joint (25) of the lever (3) with the connecting-rod (4), in addition this inclination difference considerably improves the operation of the system, as when the wing (1) is lowered and higher forces (F11, F12, F13) are required, then the displacement vectors of the crank (5) end relative to the connecting-rod (4) and the attachment (25) of the connecting-rod (4) to the lever (3) relative to the connecting-rod (4) itself, which transmits the forces, are almost parallel. The base variant contains the basic solution of stabilization and manoeuvrability in three axes (X,Y,Z) through a movable (1) wing and an additional stabilizing wing (9) with dihedral tips or its entirety, potentially fitted with ailerons and control surfaces (11) either on the tail, or in the canard system, set with a ready electronic flight stabilizer (10). Control of the aircraft yaw, practically in each variant, is executed by control surfaces (11). It is a system with strictly determined angles of attack (α2,β2) and the range of wing (1) operation, depending on the dimensions of its constituents, but also expansion variants are claimed, which include improvements such as: implementing a gear (13), implementing or replacing with flexible components and adjusting the wing (1) range of movement (14, 15) and angles of attack (α2, β2), the suspension (17), and use torques generated by the pendulous work of the lever (3) to turn the mechanism (12) along with the wing. The expansion variants contribute also to the improvement of the static stability and manoeuvrability. For instance, implementing a gear (13) with a constant or variable ratio and a controlled play, and a coupling gives a possibility of protecting against a stall; flexibility on the crank (5) also performs this function. The stabilization also is achieved by applying additional components, on which the airflow impacts, for instance, a stabilizer and aerodynamic brake (14.9), which under the influence of accelerated airflow shortens the lever (3) arm and increases the wing (1) movement range. In addition, by implementing the arrow (17.10) as part of the suspension (17) responding to the forces taking the aircraft out of balance, instruments for control and flight stabilization are directly achieved. Applying appropriately adjusted flexible components additionally supports the distribution of forces and energy optimization, and in the case of a cyclical movement of the wing (1), the resonance effect finds a specific application. The factors, resulting from the operation of the moving wing (1) on which the suspension (17) can impact, are involved in the control and stabilization of pitch, while balancing with the fuselage (8) mass in relation to the wing (1) controls roll. The above expansions allow the stabilizing wing (9) to be minimized, thereby reducing drag. The execution of various flight modes and the full optimization of the system operation is possible by extending to include an electronic control system, comprising: sensors (20) and a controller (21), drivers (32) and actuators (33), with a special importance of the control of motor (7) operation for the whole system, these components finally enable various flight modes to be executed, increase the propulsion effectiveness, stabilize flight, and also allow the system to be used as a device for acquiring energy.

## Description

This application relates to a complete drive of an aircraft, along with the flight control and stabilization system, in an aerodyne, whose operation is the most similar to an ornithopter and a glider.

The field of the present invention is aviation, where mechanical, mechatronic electronically controlled and supported solutions are applied.

### State of the Art:

Omithopters, whose wings flap by rotation-oscillation of wings around the axis parallel to the flight direction, are commonly known. In most of them, the movement imparted to the wing causes automatic compounding of the skin plating as a result of inertia and aerodynamic resistance in the medium. Solutions like these had already been invented by Leonardo da Vinci and patented since the turn of the 19th and 20th centuries, for instance: GB 189423564A, GB 189500006A, US781104A. Already in patent GB189601313A, the traditional flapping involved the synchronisation of the angle and distribution of the wings with their position, and patent GB 1283583A claimed a polygonal mechanism to fold the edge of attack in the front profile, similar to newer applications: CN203854858U, CN216783851U. An invention of 1976, which was published as US4139171A, was a large-scale ornithopter, which successfully performed flights, and the essence of its drive was an articulated wing shifted vertically in the centre, which caused flapping of its extreme parts. In our times, solutions of a classic ornithopter with a determined angle of attack of its wings are also published, among others, in application RU2236988C2, using a crank and a connecting rod or, e.g. in application CN108082473A, where a crankshaft, or a double crank with ends, to which crankshafts for changing the height and angle of the wing are attached, is used for lifting and lowering the wing and to change its angle. Application US4712749A presents a solution for flapping wings and a theoretical model of the wing trajectory and angles. The Aqua Skipper invention, published with number TWM364655U, where a rigid plane shifts in the water environment. In Japan and in Russia, also in the 20th century, research on the water craft propulsion with rigid, movable planes and obtaining energy from water surface waving was carried out and described in a paper "Aerohydrodynamics of flapping-wing propulsors" Kirill V. Rozhdestvensky, Vladimir A. Ryzhov, which contained extension to aircraft, with the theory of flight showing a lower value of the wing angle during its descending relative to the value of the wing angle during its ascending. Otto Lilienthal presented conclusions about this difference of angles in his research on the stork flight "Der Vogelflug als Grundlage der Fliegekunst", published in 1889. A previous patent application of the author, no. P.425973 of 2018, contains solutions whose essence is based on shifting a plane relative to weight instead of traditional flapping, and it covers general assumptions of propulsion in the context of forces applied and energy spending. The potential of a rigid, shifted plane was already noticed at the beginning of the 20th century, which usually had the form of lamellas with flexible fittings, acting as a valve passing air in one direction, which could be seen in publication GB191106657A of 1911 Application GB118659A of 1918 contains a solution where the wing is shifted vertically thanks to being placed on a parallelogram-shaped mechanism driven directly by a piston, and angles are set by a cam-tendon gear. Application US 1791079A contains an invention in which the wing is synchronously shifted vertically and turned by two cranks simultaneously. The application US42046630A from 1930 includes an ornithopter solution with a sliding and roughly rotatable wing based on a crosshead mechanism. In turn, document GB377744A contains a solution where the wings are placed on a common rocker driven by a crank, which results in shifting the wings vertically, and the wing angle of attack is obtained indirectly by a specific spring-and-guide mechanism limiting excessively free setting of the angle of attack as a result of inertia and aerodynamic forces. An example of a solution using a lever mechanism is the subject of application DED0006558D, in which a complex system requiring a tensioner to operate is driven indirectly by a double crank within one crankshaft. Among more recent applications with a similar operation, document US2006102782A1 can be quoted, containing information about a smaller-scale aircraft with a rotary wing, which rotates in the horizontal axis crosswise to the flight direction; however, the effect of its work is more similar to a fin. Shifting a wing-blade was obtained in application EP2282932A2. Synchronous shifting of the wing along with a change in its profile similar to in a paraglide, by a system of tension members was applied in 2005 as DE 102005021852.

### Determining the invention disclosure and technical problem:

Typical flapping, when at least a pair of wings performs pendolous and synchronic movement around the fuselage, requires flexible wing plating in order to mitigate angles of attack close to the fuselage. This plating is subject to substantial displacements, when the wing is at its movement range extremes even at a mechanically determined angle of attack of the wing.

In a self-aligning flexible plating, there is a problem of similar angles for raising and lowering the wing, even though these angles should be substantially different. In addition, the closer to the fuselage the weaker transmission of the system's work to propulsion in the air due to the shorter range of the wing movement. As it is difficult to obtain precise angles of attack of wings of traditional omithopters, these angles are substantially lowered, to obtain the static stability. This causes large losses and, therefore, low efficiency and performance of the propulsion in such aircraft.

As pointed out in the section on state of the art, solutions offering a shift of a rigid wing synchronized with a change in the angle of attack have already been proposed. However, they probably did not live to see a successful implementation, due to inaccurately adopted angles of attacks of the wing or heavy and complicated mechanisms, which resulted in a highly unstable operation of the systems with high losses. The main problem that prevented a successful flight using a sliding wing was the lack of a comprehensive solution, including, apart from propulsion, issues of control and flight stabilization. It was similar to the case of the first helicopters, where the propeller itself, rotating roughly in the vertical axis, despite generating thrust did not allow propulsion yet.

Technical measures included in this patent applications constitute a comprehensive solution, responding to a theoretical flight model using a wing as rigid as possible, shifted vertically and with synchronized turning to change the angle of attack. In this model, the whole cycle is divided into two basic phases: propelling the fuselage by lowering the wing and returning the wing to its top position alternately. Between these phases, there are also short neutral moments, i.e. the wing located at its top and bottom positions adoptes es a neutral angle of attack, or barely deviating from its neutral position. The optimum operation of an aircraft like this is provided not just by the thrust force generated by the cyclically moving wing, but by an appropriate path and angles of the wing relative to the aircraft and the medium in which it moves, which directly translates the forces from the moving wing into aerodynamic lifts and forces propelling the aircraft. During the phase of propelling and lifting the fuselage, the wing angle is much smaller (more horizontal) than the tangent of the chord of the wing profile to its path of displacement in the medium. In this phase, significant work is performed, which requires substantial forces to press down the gliding wing in order to achieve a sufficient aerodynamic force propelling the aircraft longitudinally, and an aerodynamic lift maintaining the fuselage ceiling, and in some flight modes even lifting the fuselage. In the phase of returning the wing to its top position, in order to reduce losses the adopted wing angle of attack is much better inscribed into the wing trajectory in the medium than in the first phase and, therefore, the force needed to propel the wing is here relatively lower, only needed to achieve the minimum aerodynamic lift maintaining the fuselage. The energy expenditure necessary to return the wing to its top position is relatively lower than when lowering the wing and it largely depends on the adjustment of the angle of attack and the mass, rigidity, profile and wing dimensions. Wing angles of attack between the phases should change smoothly. Within the whole document, the values of the angle of attack of the moving wing are defined by their absolute values, even if in the aviation nomenclature they would be defined as negative during lowering and positive during raising. All angles in the documentation refer to the aircraft in a normal, cruising, horizontal flight. It is recommended to adjust the wing profile and angles of attack so that at any time they provide lift to the aircraft, thus minimizing jerking of the fuselage in the vertical direction. Another essential flight factors accompanying propulsion are stability and manoeuvrability, which for the propulsion concerned are conditional to operation. The above-described angles of attack must be precisely adjusted to the airflow around the moving wing, so that the principle of operation is satisfied. In real-world conditions, for even minor turbulence or changes in the air velocity relative to the aircraft, the above assumptions can be disturbed, which disrupts the operation of propulsion, takes the aircraft out of balance, even leading to a stall. Making the angles of attack much smaller solves the problem of instability in the flight, but it drastically reduces the propulsion efficiency, as it causes a vertical movement of the fuselage instead of a wing movement in this direction. Therefore, the problem of static stability of the aircraft and its control should be solved in parallel with the proposed propulsion.

The essence of this invention is a set of solutions ensuring the optimal transmission of forces from the motor and their distribution in phases, improving energy expenditure, as well as control and flight stability, based on a flat mechanism transmitting drive from a single, cyclically rotating crank to the wing, so that a crank movement in the vertical direction is translated into a basically reciprocating movement of the wing in the vertical direction, while a crank movement in the flight direction is translated into a change in the wing angle of attack, thereby synchronized with the wing shift. The system consists in aerodynamic, mechanical and electronic solutions of the indicated issues. Pitch is controlled with control surfaces, supplemented by adjusting operating parameters of the moving wing. Yaw is controlled as a standard with control surfaces, whereas roll can be controlled by ailerons on the stabilizing and on the moving wings or by perpendicular balancing with the fuselage weight or individual components. A comprehensive study of these issues using the specific mechanism provides versatile, lightweight, compact, vital and reliable propulsion with substantially increased efficiency, being virtually silent during operation.

The base variant of the craft propulsion is based on a generally flat vertical mechanism located along the ornithopter's flight path, this mechanism transmits power from the motor, so that a vertical movement of the crank causes a pendulous movement of the wing, which is approximately a reciprocating movement in the vertical direction, and a horizontal crank movement translates into a change in the wing angle of attack. The crank, turning around the horizontal axis drives a connecting-rod basically in the vertical direction, and this connecting rod puts in a pendulous motion a lever moving the wing beam, to which the wing is directly and immovably secured. This pendulous motion of the wing and many other components of the mechanism in most embodiments generates forces with senses supporting the correct adoption of angles of attack by the wing. The horizontal movement of the crank is transmitted by a stick connected directly to the crank or the connecting-rod to the wing beam and the wing, thereby providing diversification of the wing angles of attack in various phases of the crank work, and thus in various phases of the wing movement. The difference in displacement in the horizontal direction of the connection of the crank to the connecting-rod and the lever joint to the connecting-rod during its pendulous motion transmitted to the wing gives desirable settings of its angles of attack, or in most variants a lower value of the angle for lowering the wing than for its raising. The next benefit of the invention is an improvement of the force model, in which, thanks to the described difference in joint displacements in the phase of a higher load on the mechanism, or when lowering the wing, the force transmission is streamlined, as the force vectors on the movable connections that participate in the drive transmission are closer to tangency, which supports the work performed. In the base solution, the angles of attack of the moving wing should be slightly lowered, so that the stability in flight is achieved at a minimum loss, and the fuselage vertical movement is reduced thanks to the stabilizing wing, while unwanted fuselage pitch is reduced thanks to control surfaces controlled with an electronic piezoelectric stabilizer or a gyroscope.

Another variant is the development of the system by a gear between the motor and the crank, which enables the high efficiency of motor operation achieved at a high speed but at a low torque to be utilized to achieve the desired operation of the crank at a low speed and a high torque. The gear can have a controlled running clearance and a coupling being a kind of a stabilizer, as during a risk of stall it is sufficient to loosen the drive, and the wing carried away by the rush of air accelerates its movement with the same sense as its cyclic movement in an automatic or controlled manner. Thereby, the moving wing adoptes the neutral position and the opposite sense faster, which counteracts stalls. An effective protection can also be achieved by a gear automatically changing its ratio. Thanks to the above described flight stabilisers, it is possible to adjust angles of attack closer to the optimum, which allows the stabilizing wing to be smaller, and at the same time energy losses arising from the drag in the air to be reduced.

The third variant, being the next development variant, involves the possibility of adding or replacing rigid components with flexible ones, and adding a device to adjust the elasticity and working length, which improves the distribution of forces increasing the propulsion efficiency during the wing movement cycle, and enables mechanism's operating parameters, such as wing's angles of attack and movement range to be modified, by modifying the system geometry. Flexibility can be introduced at the lever and its fastening to the fuselage, which can give resonance during operation to support maintaining a uniform cyclic movement, and can protect the motor against overloads. Adding spring components to the lever or replacing it with a spring component also provides a possibility of diversifying the forces during the lowering and raising of the wing, which differentiates the speed and output of the motor, and it is particularly applicable in sub-variants where the angle of attack during the lowering of the wing is greater than during its raising. Adjusting the working length gives various leverages, which influences the path of the joint with the connecting-rod, so it changes the angles of attack and the range of wing movement. Introducing flexibility for the connecting-rod when it is locked to the lever and elasticity adjuster gives a different transmission of the horizontal crank action to the rod movement, which influences the wing angles of attack. However, transformation of the crank so that it becomes a flexible component, provides a stabilizer within this embodiment. Thanks to the spring-loaded component directly replacing the crank, or an added spiral spring with the crank retained, more or less energy is stored, so when a stall begins and the wing is carried away by the rush of air, this energy is released, accelerating the wing movement and preventing the stall. This type of stabilization also allows the angles of attack to be better inscribed into the wing path in the air and the stabilizing wing to be made smaller, resulting in an increased propulsion efficiency, as by introducing a stabilizer and aerodynamic brake, which impacts the working length of the lever and the position of the joint connecting the lever to the fuselage, it changes the range of movement and angles of the wing depending on the air stream velocity.

The fourth variant of the solution is a further expansion by an additional intermediate mechanism or additional intermediate drive, which, by means of mechanical transmission of drive or additional drive electronically synchronized with the operation of the system, enables the wing angles of attack to be freely set. The wing in this variant is shifted as in the previous ones, i.e. through the crank and connecting-rod, but the wing turn is obtained indirectly be an additional intermediate mechanism or an additional intermediate drive made as an additional lever supported at one or two points, driven by an additional stick, or as an additional crank driven by an additional drive or rotated from the crank axle through various variants of the gear. The additional mechanism or intermediate drive allows, in practice, angles of attack and proportions between the angle of attack during the raising of the wing in relation to the wing angle of attack during its lowering to be freely set. In order to simplify the mechanism, the lever can be replaced by bracing the beam joint with the connecting rod or the beam joint with the stick, and then the beam is fixed roughly in parallel to the wing profile. Stabilization is achieved by the monitoring of parameters and by a stabilizing wing, with the possibility of using the stabilizer and aerodynamic brake or a stabilizing arrow.

The fifth variant introduces a suspension, which can reduce, distribute in time or use forces and torques created during the operation of the system, for instance to turn the wing. A turn like this can be used to change angles and the range of the wing movement, which are fundamental operating parameters, because forces and torques support this in most sub-variants of the embodiment of the base mechanism. The suspension can also be used to control the aircraft and stabilize the flight in pitch and roll. It is achieved by applying the suspension between the wing and the fuselage. And thus, hanging the wing to a beam in the fuselage axis provides the possibility of balancing the fuselage weight with respect to the wing plane, alternatively executed also as transverse movement of the fuselage with respect to the mechanism, and pendulous turning of the fuselage with respect to the mechanism. It can automatically deflect under the influence of gravitation and inertia forces, or it can be deflected in order to control the roll of the aircraft in the fuselage axis. The suspension can have springs, shock absorption, damping of various kinds, drive and control of operating parameters. On the other hand, stabilization and manoeuvrability in pitch is achieved by a spontaneous yield of the wing, when its action is accelerated, then during the raising of the wing the lever joint with the fuselage moves forward. This joint can also be shifted by the proposed arrow, being an inertial and aerodynamic stabilizer, which in the case of a sudden turn of the fuselage or a change in the airflow direction, moves the connection of the lever to the fuselage so as to compensate the fuselage yaws from the desired flight path.

The sixth variant enables components of the mechanism to be replaced, in particular the crank and the lever, with components having movement paths with more freedom, for instance by a cam-guide or a system of guide wheels and a chain or belt, which enables the freedom of setting mechanism operating parameters to be increased, and the mechanism to be miniaturized, with the design analogous to the base variant and other expansion variants.

The seventh embodiment is an electronic control system, which working with any previous variant of the solution gives the possibility of optimizing the operation of the system in terms of manoeuvrability, flight stability, energy expenditure and acquisition. The program, receiving the tasks, initial parameters and information about factors, adjusts target parameters executed by the aircraft. This enables the invention potential to be fully utilized, as thanks to sensors reading the state of the system components and the ambient conditions, the electronic controller controls according to the user's commands, so that actuators, via drivers, adjust the operating parameters of the wing and the whole aircraft in order to maximise propulsion efficiency, while maintaining flight stability and manoeuvrability. This is achieved by precisely adjusting the wing angles of attack to its path in the air, or by modifying the wing path in the air to the previously adjusted angles of attack, which can be achieved by changing the wing movement range, and in particular variable and controllable motor speed. The last option involves the highest functionality, as despite the simplicity of embodiment it gives a possibility of almost immediate response of the motor, which also fulfils the function of a flight stabilizer. The control system also allows individual flight modes to be executed, and in special circumstances the invention to be used for acquiring energy from the airflow around the wing.

### Preferred effects of the invention:

The solution comprehensively ensures the aircraft flight, along with control and stabilization by giving a propulsion system operating in various conditions, versatile, lightweight, compact, durable, reliable and with optimized efficiency, being virtually silent during operation.

The simplicity and specific design of the drive transmission mechanism, which can be arranged on just two layers, provide a series of key benefits in the aviation, such as: reducing the mass and aerodynamic drags of the aircraft, increasing the stability and improving the precision of the mechanism operation, increasing service life and reliability, and reducing loss during operation, as no tensioners or crossheads are needed, even in an advanced embodiment, and due to the specificity of the mechanism vectors of the forces driving the system have the same direction as the vectors of the forces in the system during the highest load. The pendulous movement of the wing also generates torques supporting the proper adjustment of the angle of attack. Applying properly selected flexible components further improves the distribution of forces and the utilization of work provided by the motor. These significant benefits, combined with the ability to easily modify the geometry due to a small number of components and thereby to set the operating parameters, have resulted in successful prototypes with excellent flight parameters and flight performance.

The solution, even in the base variant, because it is a direct propulsion using wing gliding, with a lightweight, compact and stable low frequency mechanism, with minimized losses thanks to the working characteristics of the propulsion system patented, results in a silent aircraft with extremely high efficiency and, therefore, a long range and a long flight time. Variants expanding the system give the possibility of executing various flight modes and the maximum optimization of the flight and acquiring energy from the airflow, which additionally extends the aircraft range and flight time.

### Explanation of figures:

The illustrations, in most cases are numbered to reflect the embodiments in line with the logic of claims, where the first number defines the variant number being at the same time the claim number, the second number is a sub-variant of the embodiment, the third number means the next elaboration of the sub-variant, and the fourth number indicates a specific method of presentation.

Almost all illustrations are oriented in the same way, i.e. the X-axis is the horizontal flight direction pointing to the right, the Y-axis - is the horizontal transverse direction of the leading edge - pointing inwards into the illustration, the Z-axis is the vertical direction pointing upwards. Exceptions in terms of projection are illustrations: 5.0.1.1, 5.0.2.1, 5.0.3.1, which are in the frontal view, whereas in illustrations 7.0.0, 7.0.1, 7.0.1.1, 7.0.1.2, 7.0.1.3, 7.0.1.4, 7.0.1.5 directions are irrelevant. And so: the more forward something is, the higher are X-values, if at the back (behind something) it has lower X values, the higher something is, the higher are Z-values, and the lower it is, the lower are Z-values. All illustrations have consistent, following numbers of components:
1-wing, 2-wing beam, 3-lever, 4-connecting-rod, 5-crank, 6-stick, 7-motor, 8-fuselage 9-stabilizing wing, 10-electronic stabilizer, 11-control surfaces, 12- drive transmission mechanism (shortly: mechanism), 13-gear, 14-device for adjusting elasticity and working length, 14.1-slide for adjusting elasticity, 14.2-adjuster for step changes of the joint position, 14.3-adjuster for variable changes of the joint position, 14.4-added flexible component, 14.8-lever or cable changing sense, 14.9-stabilizer and aerodynamic brake, 15-additional intermediate mechanism or additional intermediate drive, 15.1-additional lever with variable fulcrums, 15.2-variable fulcrums, 15.3-roller, toothed wheel or belt pulley or cam, 15.3.3-additional intermediate wheel, roller or tensioner, 15.5-tensioner, 15.5-additional crank, 15.7-additional drive, 15.19-belt or chain, 16-additional stick, 17-suspension, 17.1-suspension beam, 17.2-suspended connection, 17.4-suspension spring, 17.6-suspension stick, 17.8-arrow body, 17.8.8-bob, 17.9-arrow stabilizer, 17.10-stabilizing arrow, 18-cam-guide or guide wheel system, 19-belt or chain, 20-sensors, 21-electronic controller, 22-movable connection of motor and gear, 23-articulated joint-movable connection of beam and lever, 24-articulated joint of lever and fuselage, 25-articulated joint of lever and connecting-rod, 26-articulated joint of connecting-rod and crank, 27-articulated joint-crank axle 28-articulated joint of stick and connecting-rod or articulated joint of stick and crank or articulated joint of stick and fuselage, 29-articulated joint of beam and stick, 30-fixed connection of motor and fuselage, 31-fixed connection of gear and fuselage, 32-driver, 33-actuator, 34-energy accumulator, α1-angle relative to the plumb-line of the connecting-rod 4 at the centre of the wing 1 lowering phase, β1-angle relative to the plumb-line of the connecting-rod 4 at the centre of the wing 1 raising phase, α2-wing 1 attack of angle with its extreme at the centre of the wing lowering phase with a smooth changes to the neutral position, β2-wing 1 attack of angle with its extreme at the centre of the wing raising phase with a smooth changes to the neutral position, F11-force vector at the end of the crank ultimately driving the wing downwards, F12-force vector along the connecting-rod ultimately driving the wing downwards, F13-force vector at the articulated joint of connecting-rod and lever, ultimately driving the wing downwards, F21-force vector at the end of the crank ultimately driving the wing upwards, F22-force vector along the connecting-rod ultimately driving the wing upwards, F23-force vector at the articulated joint of connecting-rod and lever, ultimately driving the wing upwards, F3-forces of inertia created during the system operation, Q-user, X,Y,Z-rectangular, right-handed coordinate system, X-longitudinal axis along the fuselage 8 with direction of normal, cruising, horizontal flight, Y-transverse, horizontal aircraft pitch axis, Z-vertical axis directed upwards, XY- horizontal plane, ZX- vertical, longitudinal, lateral plane, YZ-vertical, transverse, frontal plane, I, II, III, IV-mechanism layers, -> power supply in the control system diagram, - - -> information flow in the control system diagram, -> bold arrow is force or torque, wavy arrow-air stream, S-electronic control and stabilization system, T-tasks-requests, P1-initial parameters, I-information on the craft and ambient condition. R-reality, P2-target parameters-current, E-execution, B-flight balance, V-flight speed, L-level-aircraft ceiling, N-variant number, arrows for 1-lowering or raising the wing, 0-maintaining value, +-increasing value, --decreasing value, ω:5-crank angular velocity, ↕ 1-wing movement range, 11 → θ:8-translation of control surface 11 into angle of fuselage 8 measured in respect to X, E-energy efficiency, o-hovering, CH-energy accumulator charging mode, the arrows reflect the path in the medium, the bold line separates individual groups of control modes from the simplest to the most complicated embodiments, the dotted line denotes specific control modes.

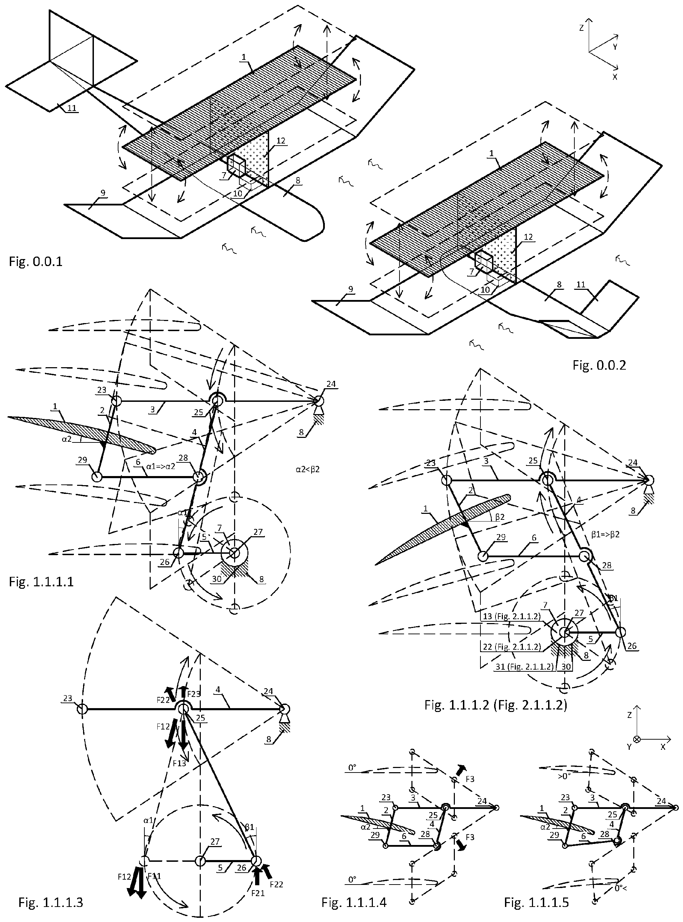

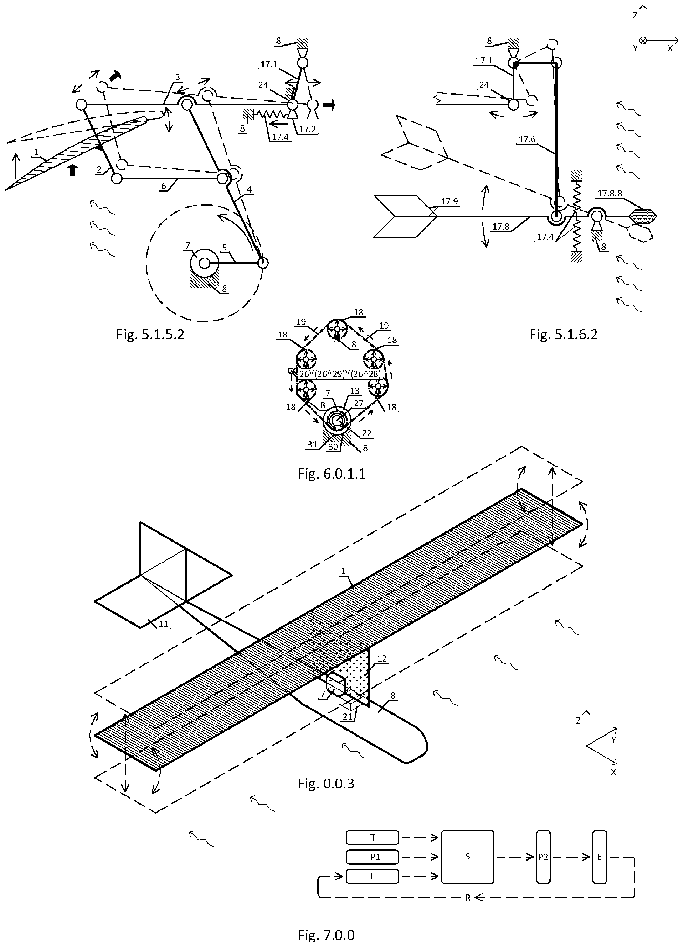

Figure 0.0.1 is an isometric depiction of the aircraft, with the generally presented mechanism 12 transferring propulsion to the wing 1. The degree of freedom can be roughly seen without details of movement and components. This is a classic system, with control surfaces 11 at the tail of the fuselage 8, with a stabilizing wing 9. Figure 0.0.2, in turn, similarly to the first one presents the aircraft with the drive 12 in question, however in the "canard" configuration - with the control surfaces 11 at the fuselage's 8 nose, also with a stabilizing wing. Figure 0.0.3, on the other hand, is located on the sixth page of illustrations, because the aircraft variant without a stabilizing wing presented here is only possible to be implemented in more advanced expansion versions. The definition of the angle of attack α2 and β2 in the whole documentation concerns only the movable wing 1, whereas the angle of incidence concerns only the stabilizing wing 9. In the static diagrams the base means fuselage 8. Wherever the angle of attack α2 and β2 appears in the documentation, it means the absolute value measured in respect to level X.

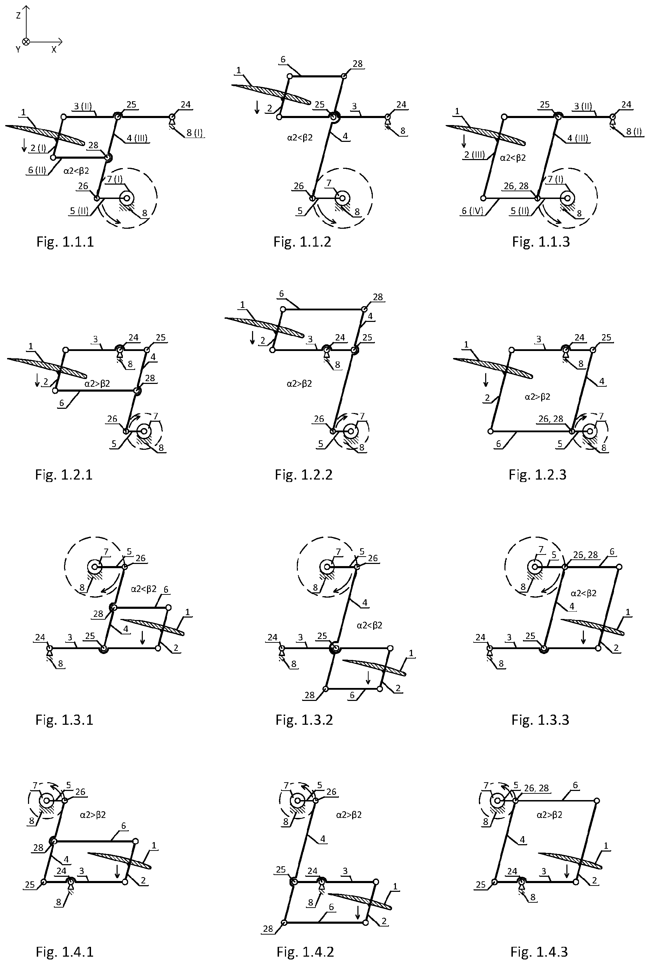

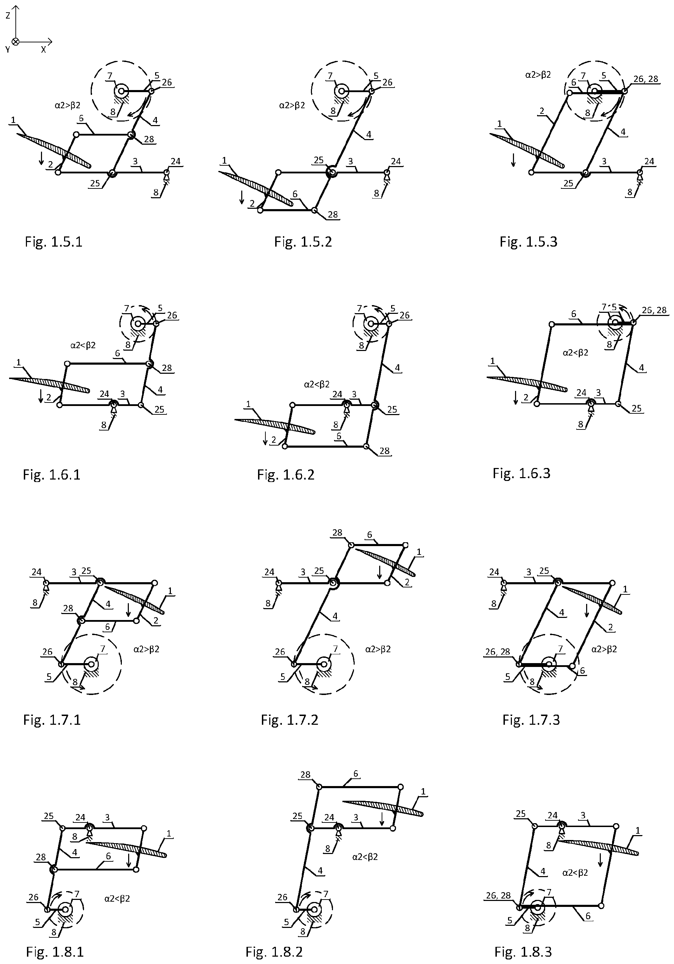

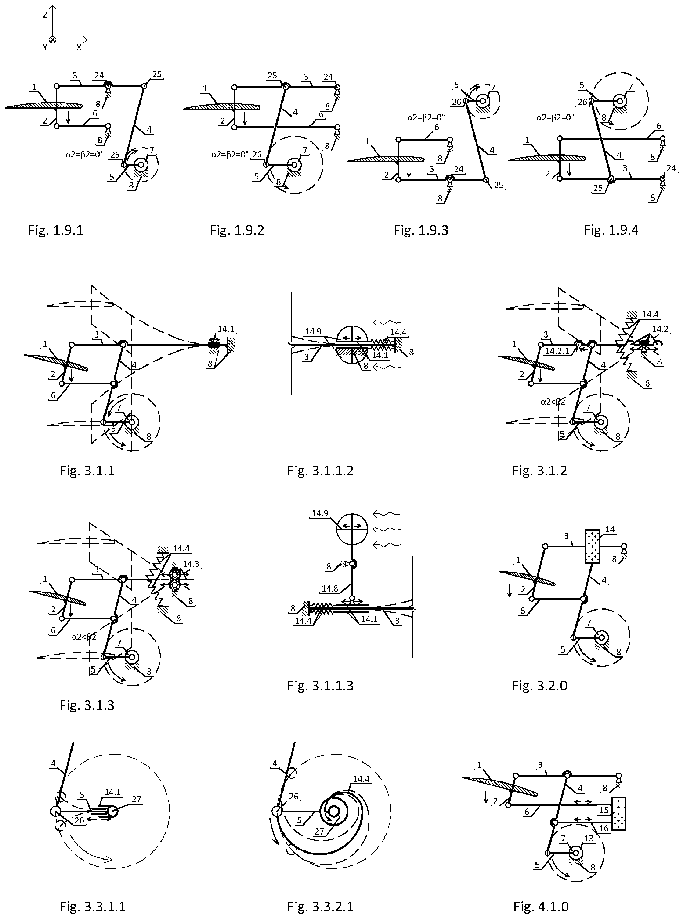

Figure 1.1.1.1 presents in a kinematic diagram the base variant in the first sub-variant of the mechanism 12, which is indicated by the first three numbers equal to 1, which in typical application has the most positive effects of use. This illustration presents the lowering phase of the wing 1 in the middle of its duration, presenting intermediate stages - with a dashed line from the neutral top position through 1/4 of the lowering phase, 1/2 of the lowering phase - with a bold solid line, through 3/4 of the phase until the bottom neutral position of the wing 1. Figure 1.1.1.2, similarly to the previous illustration, shows the mechanism 12 in the raising phase of the wing. This diagram shows also the components added in the second claim, described: "(Figure 2.1.1.2)", i.e.: the gear 13, its fastening - a movable connection 22 to the motor, and a fixed connection 31 to the fuselage 8, which transmits the drive to the crank 5 axle 27, and the presented case illustrates the gear coaxially mounted on the motor.

Figure 1.1.1.3 shows the preferred impact of the mechanism 12 geometry on the force vectors in the general variant, with similar directions of vectors F11, F12 and F13 for lowering the wing 1, when higher forces are required, and more diverging for a less demanding stage. The base position of the system is at the centre of the wing 1 raising phase, the alternative position - the dashed line at the centre of the lowering phase of the wing 1. The above distribution of the forces occurs for all sub-variants seen in the following illustrations, where the angle of descent of wing 1 is less than the angle of lift of wing 1, i.e. α2<β2. Illustration 1.1.1.4 also shows the base variant with the presentation of forces F3, which support the rotation of the wing in all variants, where the articulated joint 24 of the lever 3 to the fuselage 8 is located under the wing 1. Figure 1.1.1.5 presents the impact of the departure from a parallelogram in the quadrangular part of the mechanism 12, comprising the wing beam 2, lever 3, connecting-rod 4, stick 6 on the angles of attack of the wing 1 for the extreme top and bottom positions. In this case, the distance between the joints on the beam 2 was extended in respect to the distance between the joints on the connecting-rod 4, but any other modification of distance between the joints can be made for any components of the mechanism 12, with a similar result. It gave descent of the wing 1 in its top position, and lift of the wing 1 in its bottom position, which facilitates turning back the wing 1 during the operation of the system.

Illustrations 1.1.1. to 1.9.4 show in kinematic diagrams in the middle of the lowering phase of the wing 1 the sub-variants of the embodiment of the mechanism 12 in the base variant - as claimed in claim no. 1, and the numbers of illustrations in this range are literally the numbers of the sub-variants, to which the illustrations refer. Fig. 1.1.1, Fig. 1.1.2, Fig. 1.1.3 show a mechanism with identical working characteristics, but with different position of the joint 28 on the connecting-rod 4, joining the connecting-rod to the stick. In variant 1.1.1, the stick 6 is secured to the connecting-rod 4 below the lever 3, whereas in variant 1.1.2 the joint 28 is above the lever, and in variant 1.1.3 the joint is at the end of the crank, i.e. in the place of joint 26. The subsequent 3 sub-variants 1.2.1, 1.2.2, 1.2.3 are structurally equivalents of the first three sub-variants, however, when for sub-variants 1.1.1, 1.1.2, 1.1.3 the joint 25 is between the joints 23 and 24, for sub-variants 1.2.1, 1.2.2, 1.2.3 the joint 24 is located on the lever 3, between the joints 23 and 25, which are at the ends of the lever 3, which reverses the ratios of the angles of attack α2 and β2 for the lowering of the wing 1 in relation to the angle β2 for its 1 raising between the first and the second triplet of the sub-variants. To sum up, all of variants 1.1.1 to 1.2.3 have a joint 24 connecting the lever 3 to the fuselage 8 in front of, and the crank 5 under the averaged position of the wing 1.

Sub-variants 1.3.1 to 1.4.3, in terms of mutual relationships, one by one are equivalents of sub-variants 1.1.1 to 1.2.3, maintaining their order. However, the orientation of mechanism 12 components is changed, so that the average position of the wing 1 is below the crank 5 and in front of the joint 24 of the lever 3 with the fuselage 8.

On the other hand, sub-variants 1.5.1 to 1.6.3 are corresponding to the previous six ones; however the wing 1 is located below the crank 5 and behind the joint 24 of the lever 3 with fuselage 8. Solutions 1.7.1 to 1.8.3 also are in line with the previous topology of the mechanism 12, but the wing 1 in the averaged position is in front of the joint 24 of the lever 3 and fuselage 8, and above the crank 5.

However, mechanism sub-variants 1.9.1 to 1.9.4 differ from the above by the stick 6 secured with the joint 28 directly to the fuselage 8 instead of to the connecting-rod 4 or the end of the crank 5 and the beginning of the connecting-rod 4. In all sub-variants 1.9.1 to 1.9.4, the joint 24 between the crank 3 and the fuselage is located in front of the wing in the averaged position. In a system like this, even though the wing angle of attack relative to the fuselage is maintained, in a simplified version the forces acting on the system near the end of the wing's range of movement can be used to create an adequate turn of the wing 1 itself, its part, the plating or the entire aircraft.

Illustrations with numbers starting with 3 depict the third embodiment expanding the base variant by replacing bar-type rigid components with flexible components, and a device for adjusting the elasticity and working length 14 has been added to the components of the mechanism 12. Variant 3.1 includes all sub-variants of the mechanism modified this way, where the adjustment of the working length and elasticity concerns the crank 3 and its connection 24 to the fuselage 8. It is analogous in all modifications that concern all sub-variants of the base variant but are presented on a single example only, as here the systematics of the sub-variants of the first variant is replaced with the new numbering system determining the elaboration of technical solutions. Figure 3.1.1 depicts the replacement of the lever 3 with a flexible component with a slide to change the elasticity and working length 14.1, and the joint 24 is replaced with a fixed connection with an added slide to adjust the elasticity and the working length 14.1 - at the same time it changes the elasticity, component working length and actually operating position of the joint 24. Figure 3.1.2 shows flexible components 14.4 added to the rigid lever 3 and the adjuster for a step change of the position of the joint 14.2 - at the same time it changes the elasticity, the working length of the component and the operating position of the joint 24, as well as the work expenditure and work rate within the cycle. Figure 3.1.3 also shows the flexible components 14.4 added to the rigid lever 3, but the adjuster is for a variable change of the position of the joint 14.3. At the same time, it changes elasticity, the working length of the component and the functioning position of the joint 24, and also the work expenditure and work rate within the cycle, especially as the elasticity of the components 14.4 can be adjusted. Fig. 3.1.1.2 also shows an automatic, mechanical adjuster of angles and movement range on the lever 3, using a stabilizer and aerodynamic brake 14.9. This figure is an expansion of variants 1.1, but it can be applied for all sub-variants of the solution having a joint 24 at the front of the mechanism 12, as a faster airflow by carrying away the stabilizer and aerodynamic brake 14.9 reduces the arm of the lever 3, and thus increases the wing 1 movement range. However, when the joint 24 is at the rear of the mechanism, a lever or cable changing the sense 14.8 is needed to reverse the effect of action of the stabilizer and aerodynamic brake 14.9, which is shown in Fig. 3.1.1.3.

While variant 3.1 concerns the lever 3 with the joint 24, variant 3.2 concerns the connecting-rod 4 and its connection 25 to the lever 3 similarly as in sub-variants of variant 3.1, so Figure 3.2.0 only contains general information on the location of modifications in this variant.

Variant 3.3 features the application of a device for adjusting elasticity and working length 14 for the crank 5 and its connection to the axle 27, only shown as close-ups of the crank 5 and its immediate vicinity. It also can be solved in a similar way as part of the end of the crank 5 - joint 26, which performs analogous rotary work to the axle 27 of the crank 5. Figure 3.3.1.1 shows the crank in close-up as a flexible component leaving the fixed connection to the axle 27 and implementing a slide for adjusting elasticity 14.1. In turn Fig. 3.3.2.1 shows the crank 5 with a movable connection to the axle 27, and the drive is transmitted indirectly by the added flexible component 14.4.

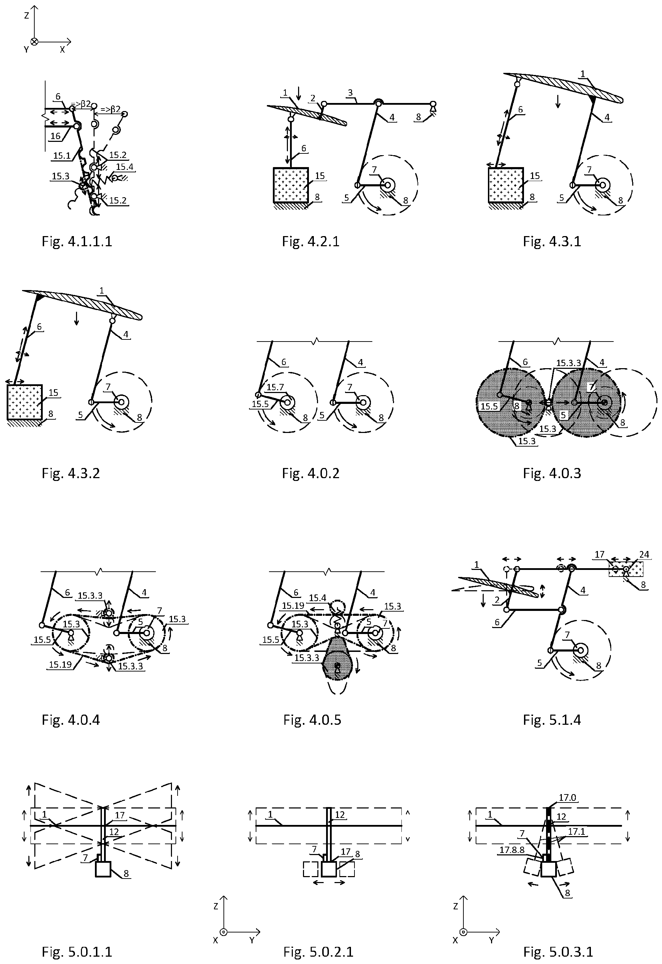

Figure 4.1.0 shows generally the fourth embodiment, as an expansion of variant 1.1.1, but being applicable also to all other sub-variants. There is also an additional intermediate mechanism or additional intermediate drive 15 and an additional stick 16 in order to act between and transform the gear ratio for a more varied change of angles of attack of the wing 1. Figure 4.1.1.1 shows a close-up of one of multiple possible sub-variants of an additional intermediate mechanism or additional intermediate drive 15. It shows an additional lever 15.1 with variable fulcrums 15.2, which transmits work from the stick 6 to an additional stick 16, which is connected to the balance of the mechanism 12 with a joint 28 or 26. Thanks to the fact that the mechanism can contain two or more fulcrums 15.2, then there are various ratios for extreme points 15.2 and, therefore, various angles of attack α2 and β2 of the wing 1 are obtained by the transmission by the stick 6 to the beam 2 and the wing 1. In this solution, to ensure its correct operation, due to the necessity for alternating fulcrums 15.2, for instance, a system to synchronize retracting points/axes or a tensioner 15.4 with an optional roller 15.3 is required.

Figure 4.2.1 presents a solution of the fourth variant with an additional intermediate mechanism or an additional intermediate drive 15 located under or above the wing 1, depending on the base variant, with the stick 6 secured directly to the wing 1. On the other hand, the sub-variants and at the same time illustrations 4.3.1 and 4.3.2 contain solutions with components distributed as in sub-variant 4.2.1, but with a simplified design due to the lack of lever 3, and bracing the connection of the wing 1 to the connecting-rod 4 in variant 4.3.1, while bracing the connection of the wing 1 to the stick 6 in variant 4.3.2. In the above variants, the beam 2 is in the diagrams tantamount to the wing 1, and parallel to it. The additional intermediate mechanism or additional intermediate drive 15 can be solved as a motor 15.7 electronically synchronized with the work of the crank, which is shown in Figure 4.0.2. Figures 4.0.3, 4.0.4 and 4.0.5 subsequently show the mechanical transmission of drive from the crank 5 axle 27, for instance, with toothed wheels or rollers 15.3 with an intermediate wheel 15.3, which gives a proper sense of operation of the additional crank 15.3. In the next example of the mechanical transmission as part of the additional intermediate mechanism or additional mechanical drive 15, the mechanism (12) is solved by a belt or chain 15.19, which can have a tensioning roller 15.3.3 added to change the working length of the stretched part of the belt or chain, which gives a phase shift of the additional crank 15.5 relative to the crank 5. Figure 4.0.5 shows a cam roller 15.3.3 as a variant enabling angles of attack α2 and β2 to be diversified within a cycle.

The fifth embodiment includes a suspension 17, which can take part in any fastening of mechanism 12 components to the fuselage 8 and, for instance, absorb adverse forces and torques or distribute forces, such as e.g. F3 shown in Fig. 1.1.1.4, in time, in order to adopt appropriate angles of attack α2 and β2. The solution of this variant can give specific control and stabilization of the aircraft flight. Figure 5.0.1.1, Figure 5.0.2.1, Figure 5.0.3.1 show, in the frontal YZ view, the use of the suspension 17 to control and stabilize the flight in the longitudinal fuselage X-axis by balancing with the fuselage 8 weight on the suspension 17 relative to the wing 1. The first of these three illustrations shows a turn of the wing 1 in the X-axis parallel to the fuselage 8 on the suspension 17 between the wing 1 and the wing beam 2, the second: a shift of the fuselage to the width Y relative to the whole mechanism, and the last picture shows a variant with the suspension 17 at the top of the mechanism, relative to which the fuselage 8 swings on an additional beam 17.1. The next solutions of the control and flight stabilization with the application of the suspension 17 are generally shown in Figure 5.1.4 as a modification of the position of the joint 24 securing the lever 3 to the fuselage 8. This action can occur automatically - as a result of the impact of the stalling forces on the wing 1, as presented in Figure 5.1.5.2, where the stalling forces lift the wing and shift the joint 24 on the suspension arm 17.1, encountering resistance of the tensioner 17.4, to avoid undesirable, excessive freedom of movement. The above-mentioned shift of the joint 24, mitigating the wing angle of attack α2 or β2, also can be triggered by an additional drive as in claim 4 or by a special arrow 17.10, shown in Figure 5.1.6.2, which has inertia thanks to the bob 17.8.8 and yields on the wind thanks to the stabilizer 17.9. A change in the angle of attack can also be achieved with the arrow 17.10 shifting the stick 6 within the fourth claim, where the arrow 17.10 performs the role of an additional drive or intermediate mechanism 15.

Figure 6.0.1.1 shows generally a modification of the mechanism enabling the motion to be diversified - shifting and turning the wing by replacing the crank 5 with a cam-guide or a system of guiding wheels 18 and a belt or chain 19, resulting in a mechanism 12 with an analogous operation as the previous ones, but the path of the articulated joint 26, or 26 and 28, or 26 and 29 has any shape instead of a circle.

Figure 7.0.0 shows schematic assumptions of the information flow in the control system, where requests T, initial parameters P1 and information I obtained from the reality R, or the system operating in the medium, go to the system S, giving target parameters P2, going to the execution E, which impacts the reality R. Thereby, a feedback loop is created.

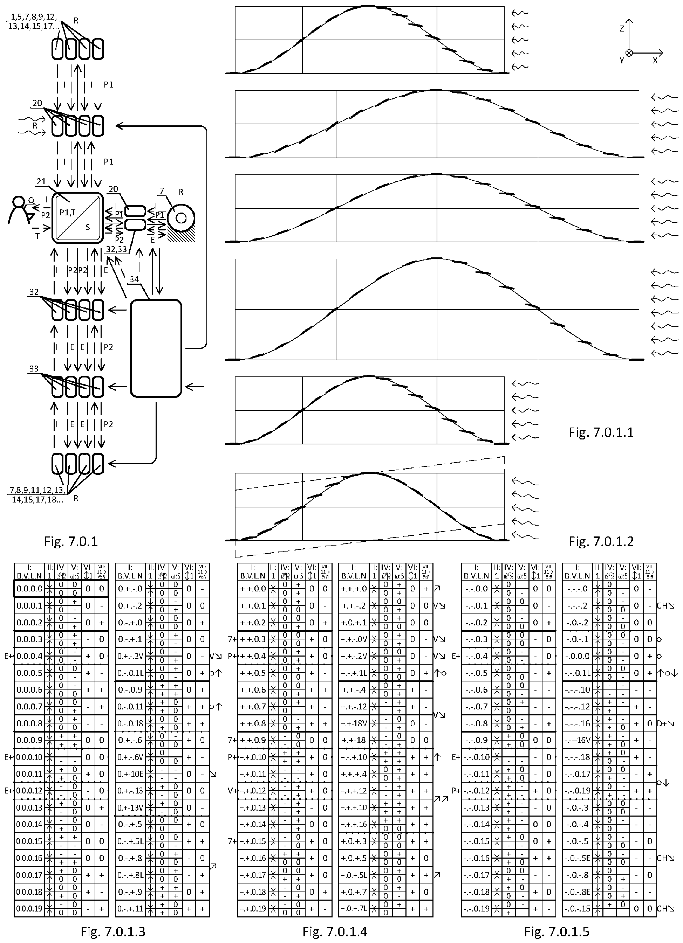

Figure 7.0.1 is a functional diagram, including blocks with individual sub-assemblies and possible connections of information flow shown as arrows with dashed lines, and power supply as arrows with solid lines. The number of arrows does not show the accurate number of connections, but rather potential connections and proportions in the information exchange. The following are among the most relevant components, which appear in this picture and in this variant: an electronic controller 21, which runs the program executed by the system S, being the foundation of operation of the system of control and stabilization of the flight, and also potentially various numbers of sensors 20, which can acquire information from various sources. To control the functions of the aircraft, the system also includes drivers 32 and actuators 33, moving various components of the aircraft. The whole system needs an energy accumulator 34 to operate. The motor 7 plays a special role in the whole solution, as it is conditional to the operation of the mechanism 12. However, the proper control of the motor also allows the functionalities to be optimized while maintaining a simple mechanism because, for instance, the variable motor 7 speed can solve many flight situations without the need of mechanical control of all system parameters, so not all components shown in the picture, on which actuators 33 impact, must be implemented, while other controlled components or components from which information is read can be added. The motor 7 is also involved in the acquisition of energy in the inverted operation mode. The number of components, from which information is acquired, the number of sensors 20, the number of drivers 32 and actuators 34 also are not precisely shown - a potential multitude of these components is indicated. To generalize, in the control system the user Q receives the information on the aircraft condition and issues tasks-requests T to the controller 21, which systematically reads the information with sensors 20 and performs the set functions with drivers 32 and actuators 33, automatically adjusting the action of the components to the assumed tasks depending on the readings from sensors 20. Figure 7.0.1 does not show sub-variants of components, assuming that when the designation concerns components, it also concerns their individual constituents, e.g. the additional mechanism or intermediate drive 15 can be read by the sensors 20 and fully controlled by drivers 32 and actuators 33 or, in a special way, by an additional motor 15.7, which is not shown in the diagram any more, but is contained in the solution. This is caused by the multitude of specific designations, and including them in the illustrations would be impractical and illegible.

Figure 7.0.1.1 illustrates the use of the control system for propulsion, presenting various phases of the wing 1 moving in the medium on graphs, where individual profiles of the wing 1 are shown in equal time intervals for each graph. The direction and sense of the medium is roughly indicated with wavy arrows, and the coordinates in the medium are indicated with a rectangular grid, as these illustrations show a horizontal flight of the fuselage 8 in the X-direction, so that the air stream flows in the opposite direction to the X-axis. The top curve shows the wing 1 path in the medium with correctly inscribing angles. The second curve shows a faster movement of the aircraft relative to the medium, therefore the angles of attack α2 and β2 of the wing 1 left in individual phases of the motion are too large and, therefore, the aircraft is losing its stability. The third curve shows a solution to the above problem by adjusting - decreasing angles of attack α2 and β2 of the wing for both phases of its motion. The fourth curve from the top shows a solution to this problem by leaving the initial angles α2 and β2, but increasing the range of wing 1 movement. The fifth curve from the top shows a solution to the problem by accelerating the motor 7 speed, while leaving the output angles α2 and β2, and the range of wing 1 movement. The motor 7 also can have varied speed in individual phases or their parts. Fig. 7.0.1.2 is a graph showing the effect of operation of the control system for acquiring energy from the ornithopter descending relative to the medium, and therefore, the medium grid, only here drawn with a dashed line, is transformed to a parallelogram instead of a rectangle.

One of the possible modes of energy acquisition is presented, where angles of attack α2 and β2 are altered so that the angle β2 of the wing 1 is mitigated during its raising, which gives an upward force on the wing 1, which, as work, is used for acquiring energy by inverting the action of the motor 7. On the other hand, the wing 1 during lowering inscribes in its path in the medium by increasing the angles of attack α2 and β2, which causes a return of the wing 1 to its bottom position at a low loss. This effect can be achieved alternatively by, for instance, an adequate change of the angle of fuselage 8 inclination and a change in the motor speed 7.

The following figures are tables showing operation modes of the system, separated according to the energy balance B. The first pair of tables in Fig. 7.0.1.3 shows modes of operation with zero energy balance B, and the first example from the top encircled with a bold frame shows original parameters of the system operation giving the optimal propulsion, so that the speed V and the flight ceiling L are maintained, and the next number N is the sub-variant number. Along with the subsequent two modes following 0.0.0.0 it is the base series of settings, without any mechanical changes relative to the original settings - only the motor 7 speed and the fuselage 8 pitch change, as a result of settings of the control surfaces 11. In the next six propulsion variants separated with a bold line, also the wing 1 movement range is changed. The last ones of the indicated variants contain a possible modification of all operating parameters of the system. The tables are arranged from the modes that are simplest to be implemented to more and more complicated and difficult in implementation. Not all variants are included, as it was not possible to accommodate them in the finite number of cells. Those most difficult and least practical, which arise from the combination of the indicated variants, were omitted. Special variants are marked with a dotted contour with annotation next to the table. The second column in each illustration of Figure 7.0.1.3, Figure 7.0.1.4 and Figure 7.0.1.5 has the preserved balance, but with amended flight parameters resulting most often from the modification of settings of the control surfaces 11. The fourth character contains information about the variant, from which a specific variant is transformed, and here you can notice that the first 6 variants are transformations of the simplest ones, and the other, separated with a bold line, are more complicated. Similar rules, using two tables for each drawing apply to Figure 7.0.1.4, where a positive energy balance, or the energy expenditure for the system is shown, the first table shows an increase of speed V, and the second one the modification to the other modes. Figure 7.0.1.5 also shows a double table, but with a negative balance, which in the first table means a decrease of speed, whereas the second table of this drawing shows transformations, also those providing the possibility of acquiring energy.

### Examples of implementing the invention

According to the author's predictions, an aircraft based on the invention may have a total weight ranging from several grams to several hundred kilograms and a wingspan ranging from several millimeters to several dozen meters. The author implemented a successful prototype in the implementation variant 1.1.1 due to the relatively easy execution with a total weight of approximately 250 g and the span of the movable wing of around 60 cm and the span of the stabilizing wing 9 of approximately 80 cm with 15 cm dihedral endings of wings at an angle of 45° and the length of the entire aircraft aroud 95 cm. The wing chord is 17 cm with a flat bottom cambered airfoil for the stabilizing wing 9 and a symmetrical biconvex airfoil for the movable wing 1, the height of both profiles is approximately 1.5 cm. With the above weight and dimensions of the elements, the aircraft moves at a speed of around 25 km/h. To obtain such a flight, the wing 1 is set in motion with a frequency of about 6.5 Hz with a roughly uniform rotation of the crank 5 with a movement range of about 24 cm and the maximum angle of attack β2 of the wing 1 during its raising of about 36% and the angle α2 of the wing 1 during its lowering about 21%.

The invention is the implementation of a method of driving a movable wing 1 using original technical means, with the aim of obtaining the highest possible efficiency of the entire aircraft in flight. This means that in horizontal flight, the possibly stiffest wing 1 moves vertically with rotation, so that in the extreme positions it adoptes a neutral angle of attack or a slightly different angle from the neutral position, while lowering the wing 1, the fuselage 8 is driven, so wing 1 should have a flattened angle α2 than its path in the air, and when lifting wing 1, when it returns to the upper position, it should have an angle β2 that inscribes it in the path in the air - in order to minimize losses, the angle of attack is greater than when lowering wing 1. The proposed solution, already in the basic variant, enables the adoption of the indicated angles α2, β2, and the dependent claims protecting development variants enabling, among others, adjustment of the angles α2, β2, both initial and target - during the flight. As a result of the articulated joint 24 to the fuselage 8 of the lever 3 to which the wing 1 is attached, a strictly pendulum movement is obtained, which produces torques that can be damped, for example, by a sufficiently large inertia of the fuselage 8 or used to support changes in the angles of attack α2 and β2 of the wing 1. The drive transmission is improved thanks to the appropriate distribution of forces during the operation of the mechanism 12. The use of the controller 21, which obtains information about the system operation, flight and external conditions from sensors 20, allows the creation of a flight control and stabilization system, optimizing the effectiveness and increasing flight stability thanks to the possibility of selecting angles of attack α2 and β2, motor 7 operating rate, wing 1 movement range and other aircraft parameters within the various modes in which the system can operate. Additionally, in real conditions, for example, during flight descent or with air currents carrying the aircraft, it can be used to obtain energy from the air flow and charge the energy battery 34.

The subject of the invention is a complete air vehicle propulsion along with a flight control and stabilization system with optimization of energy expenditure and acquisition - both mechanical and electronic, operating in the context of the entire aircraft and even with the surroundings. So Fig. 0.0.1, Fig. 0.0.2 and Fig. 0.0.3 show different aircraft configurations: in the classic arrangement, in the duck arrangement, both with a stabilizing wing 9 or, as in the third example, without a stabilizing wing 9 thanks to optimization with development variants. Although the stabilizing wing 9 is shown below the movable wing 1 in the indicated drawings, the position and number of the stabilizing wings 9 may be any, the stabilizing wing 9 may be located alternatively to the lower position or altogether above the movable wing 1, it may be relatively moved forward or tucked backwards. The stabilizing wing 9 may be flat or with a fully or partly dihedral, similarly in the case of the movable wing 1. For each variant, a variety of empennage 11 can be used: standardly with elevators and rudders or in a V arrangement, or as a flying wing. The term "control surface" 11 also refers here to the possible ailerons on the movable wing 1 and the stabilizing wing 9. The stabilizing wing 9 is not necessary to achieve functional aircraft, but in the case of the basic variant - without an advanced control system, it allows controlling the ornithopter in flight. The fuselage 8 is an important element of the vehicle, because it is in relation to it 8 the wing 1 is moved and rotated, the hull 8 may constitute an independent structure or a load to which components are attached. For aerodynamic reasons, it is most reasonable for the fuselage 8 to contain the motor 7 and a gear 13 in one housing, and the lever 4 to be connected 24 with the fuselage 8 indirectly through a beam protruding from the fuselage 8. In order to maintain stiffness, the fuselage 8 can also be made peripheral - surrounding wing 1 from the bottom, top, front and rear, and to such a fuselage 8 may have connections with individual components. In real flight, in the case of a simple variant of implementation, it is necessary to slightly underestimate the angles of attack α2, β2 both during lowering and rising the wing 1 in order to reduce the risk of stalling. If only the movable wing 1 is used without the stabilizing wing 9, the inertia of the fuselage is not able to prevent stalls when the air flows around the wing 1 too quickly, i.e. the angle of attack is too large. Also in the case of significantly lower angles of attack α2 and β2, without the stabilizing wing 9, the fuselage 8 reacts to the movement of wing 1 and performs an action analogous to wing 1, with the same direction but reversed turn, which causes significant energy losses. So the stabilizing wing 9 plays an important role in the basic implementation variants because it simply enables flight, on the other hand it 9 creates longitudinal X drag, which causes energy losses. The ideal solution in terms of efficiency is to expand the basic system with development variants so that wing 1 can move with angles α2 and β2 closely matching it to the flight path when raising it in the medium, so that in real conditions the system reacts by changing speed of the wing 1 and attaack angle to adapt to the air flowing around the aircraft. In this developed variant of implementation, the stabilizing wing 9 becomes unnecessary and energy losses are minimized. The most important element of the entire system is the movable wing 1, because the purpose of the invention is to set the wing in appropriate motion and optimally use the wing movement in the air stream. The best choice to make the movable wing 1 as stiff as possible are laminates such as carbon composite with airfoils depending on the desired flight parameters. It may have a frame structure or be a shell or a shell with a truss. The wing 1 may be profiled as planar, concave-convex, plano-convex or convex-convex, or have a different airfoil in different places of the wing 1, which may be flat in the front profile or dihedral to improve stability. For proper operation, slight bending flexibility along the span of wing 1 is acceptable, but susceptibility to torsion around the Y axis is not recommended, which would result in undesirable differences in the angles of attack α2 and β2 within wing 1. The stabilizing wing 9 can be made using any technology also indicated in the movable wing 1, it works best with a small positive attack angle. The use of the invention may be freely duplicated and distributed within a single aircraft, for example doubling or otherwise arbitrary multiplication of any variant or combination of variants or parts thereof. These may be systems that cooperate or oppose each other, use the same or different motors 7. For example, duplication may consist in placing one system at the front of the aircraft and the other at the rear, powered by one motor 7 or from multiple motors 7, synchronized systems or asynchronous. Reproduction may also consist in the use of counteracting systems in the vertical stack Z, so that when one system raises wing 1, the other one lowers, thus balancing the jerks of the fuselage 8. The systems can be balanced by the same number of balancing systems or a different number with analogous or different operating parameters, electronically synchronized or mechanically: with a gear 13 or, for example, two cranks 5 on one axle 27. The invention can also be used to power traditional ornithopters, i.e. those in which at least a pair of wings 1 flaps, i.e. moves in a swinging motion around the longitudinal axis X and rotation of the wings 1 can be realized for example through the wing trusses 1, with the possible use of all development variants of the invention.

Variant 1, which is the basic variant of implementation, is characterized by the possibility of selecting the angles of attack α2 and β2 of the movable wing 1 while moving it 1 synchronously vertically, which, more precisely, is a pendular movement around the joint 24 of the lever 3 with the fuselage 8 or the beam attached to the fuselage 8. The mechanism 12 is assumed to be flat in the vertical longitudinal plane ZX, made of rigid, rod-shaped elements, but in order to stabilize it during operation, it can be fully or partially duplicated, for example, the lever 3 can also be implemented in the form of a wishbone with a double but coaxial connection. 24 movable with a fuselage 8, with joints 24 spread apart in the horizontal transverse Y axis. By assumption, all members of the mechanism 12 are connected to each other in Lower pairs having one degree of freedom - revolute joint. However, it is also possible to implement a mechanism with a higher degree of kinematic pairs the whole mechanism 12 meets the function assumed in the invention. This can be explained, for example, when it is necessary to deviate from the planeness of the system or to slightly deviate the position of the plane from the strict ZX direction and then the kinematic pair within which the spatial rotation takes place, planar revolute joint can be replaced by spherical joint. The joints can be made using any technology, for example as sliding or rolling bearings, oil or magnetic bearings. Due to the swinging movement of the lever 3, beam 2 and wing 1, which is the result of the mechanism, most joints perform a rotational movement limited in terms of angle with a variable direction, so in such cases the use of plain bearings is a right choice. The axle 27 of the crank 5 and the joint 26 at the end of the crank 5 make many repetiting full revolutions, so it is worth using rolling bearings there, but plain bearings are also justified in certain cases - a small, light ornithopter. If articulated joint 26 connetting the connecting rod 4 with the end of the crank 5, and the rod 6 is also connected to the end of the crank 5 by the joint 28, the joint 28 and the joint 26 may be coaxial or their axes may be shifted relative to each other. In the case of a radial shift of the joints, this gives different ranges of motion for joints 26 and 28, and in the case of a circumferential shift, this gives a different shift in the phase of movement for joints 26 and 28. It is also possible to combine the relative displacement of joints 26 and 28 in both indicated dimensions. All rod elements of the mechanism should be stiff and light. These may be, for example, profile elements made of aluminum or composite elements, e.g. carbon fiber, or they may alternatively be made as openwork elements, cast or cut flat or spatially from aluminum or a composite plate, e.g. carbon. The joints may be located on individual elements of the mechanism in the axis of the elements or deviate from the straight line position in any dimension. The components of the mechanism 12 may be straight or curvaceous in any dimension. The mechanism 12 may be enclosed and formed as elements with aerodynamic profiles, for example as a carbon laminate using a negative or positive mold - left inside the element. The motor 7 can be implemented as a combustion engine, pneumatic, rubber or, above all, electric motor, which can be either a popular DC motor or a brushless or stepper motor, or it can also be a ready-made servo motor that strictly follows commands. In the case of electric motors, it is best to have a relatively large diameter, which gives the desired low revolutions but high torque, i.e. the indicated operating parameters. The mechanism 12 can also be implemented as a set with a motor 7 and a beam with a joint 24 for mounting the lever 3, and the entire set can be attached directly or indirectly to the fuselage 8. In the standard version, the whole thing can be remotely controlled by radio using modeling servos, and to stabilize the flight, there can be used a modeling stabilizer based on a piezoelectric system or a gyroscope 10 and, above all, a stabilizing wing 9.

The basic variant 1 is based on a mechanism 12 that effectively transmits the drive 12 from the motor 7 to the wing 1 so that the motor 7 rotates the crank 5, which in turn moves the connecting rod 4 putting the lever 3 into a swinging motion, and the lever 3 drives the possibly stiffest wing 1, movably connected to lever 3 through beam 2, which is fixedly connected to leaf 1. As a result of the described operation, the movement of the crank 5 in the roughly vertical direction Z is translated into a swinging movement of the wing 1, which is approximately a reciprocating movement in the roughly vertical direction Z, while the flight of the entire craft is roughly horizontal along the longitudinal axis X. And the rotation of the wing 1 synchronized with the sliding is achieved thanks to the fact that from the same crank 5 as the sliding, movement in the roughly horizontal direction X is transmitted directly from the joint 26, or indirectly through the connecting rod 4 and the joint 28 to the stick 6, which in rotates the beam 2 connected motionlessly with wing 1. The implementation of the mechanism 12 observed in the illustrations is possible as a multi-layer one, and correct operation will occur both for the layers described below and for a solution symmetrical with respect to the vertical side plane ZX. The condition for correct operation is to maintain the direction of rotation of the crank 5 in relation to the individual elements within the variants indicated in the illustrations from Fig. 1.1.1 to Fig. 1.9.4. Elements may also cross individual layers, be at some joints or be completely or partially split or otherwise duplicated on layers, which is justified, for example, in terms of strength, for example, doubling but maintaining the axiality of the joint 24 connecting the lever 3 with the fuselage 8 . Among the simple variants of implementation on layers, the mechanism 12 has very good working characteristisc, arranged in layers as follows: I - motor 7, wing beam 2, fuselage 8 at the joint 24; II - crank 5, lever 3, stick 6; III - connecting rod 4. The above layering of straight elements cannot be solved in variants where the joint 28 connects the stick 6 with the end of the crank 5, but in all other variants it has only positive advantages, including: beam 2 of the wing is located in the vertical longitudinal plane ZX and the center of gravity of the mechanism 12 , which is located on one side of the vertical longitudinal plane of the ZX, can be easily balanced by the mass of the motor 7, which overall results in an easily balanced aircraft. However, in the sub-variants in which the stick 6 connects directly to the end of the crank 5, there would be a collision with the crank, so with the above-mentioned arrangement in layers, the joint 28 can be made very thin and the transition between the layers can be made between layers. This problem can alternatively be solved in many ways, for example by placing the stick 6 on layer IV and axially extending the joint 29 so as to reach from the beam 2 on layer I to the stick 6, or for example as follows: I - motor 7, fuselage 8 in place joint 24; II - crank 5, lever 3; III - connecting rod 4, beam 2; IV - stick 6. The recently described layering creates only one minor difficulty: beam 2 is not located in the middle of the span of wing 1. Variants 1.1.1, 1.1.2, 1.1.3 (illustrated in Fig.1.1.1, Fig.1.1.2, Fig.1.1.3) are almost identical in operation and similarly in the case of each subsequent three subvariants, where the third number indicates a sub-variant with the same effect as all with the same second number but with a difference only in the position of stick 6 relative to the connecting rod 4. In sub-variant 1.1.1, the stick 6 is connected to the connecting rod by a joint 28 between the joint 25 of the connecting rod 4 and the lever 3 and the joint 26 of the connecting rod 4 and the crank 5. The sub-variant 1.1.2 has a joint 25 of the connecting rod 4 and the lever 3 between the joint 28 of the stick 6 and the connecting rod 4 and the joint 26 of the connecting rod 4 and the crank 5, for this purpose the connecting rod 4 extends beyond the lever 3. Subvariant 1.1.3 has a joint 28 connecting the end of the crank 5 with the stick 6. Variants 1.1.1, 1.1.2, 1.1.3 are characterized by the fact that, taking into account the direction of flight and the defined directions of the XYZ aircraft, the joint 24 of the lever 3 and the fuselage 8 is in front of the wing 1 and the crank 5 is below the joint 24 of the lever 3 and the fuselage 8 a the crank 5 in the rear position moves down during correct rotation. This solution is characterized by a particularly simple structure, easy to balance, because the main fuselage 8 can be placed below the wing 1 and the mechanism 12 with the motor 7 at the front of the aircraft, thanks to which, regardless of the purpose of the aircraft built on the basis of the first three basic sub-variants, it will be during take-off and landing, it will not hit the ground with its movable wing 1 or mechanism 12, and if it is, for example, an observation drone, there will be no elements obscuring visibility below the fuselage 8 to which the observation equipment will be attached. The arrangement of the elements of the mechanism 12 and their operation described above make it possible to appropriately select the angles of attack α2 and β2 of the wing 1 without the need to use more advanced variants. Also important advantages of this solution are the optimization in terms of the transmission of forces during operation and the appropriate inertia forces that support the correct rotation of the wing 1 and protect to some extent against stalls by maintaining static stability. As shown in Fig. 1.1.1.1 and Fig. 1.1.1.2, due to the fact that the lever 3 moves in a pendulum motion, the joint 25 of the connecting rod 4 and lever 3 creates an arc with a specific backward deflection arrow (opposite to X), the ends of this arc are above the axis of crank 5, so if the crank 5 is pointing up or down, the connecting rod 4 is vertical, while if the crank 5 is in the extreme right or extreme left position, the connecting rod 4 is tilted and its angle of inclination depends on the size of the crank 5 , which gives the deflection, the deflection of the arc that follows the connection 25 of the connecting rod 4 with the lever 3 and the length of the connecting rod 4. The transition between the described specific values of the angle of the connecting rod 4 takes place smoothly as part of the continuous rotation of the crank 5. Due to the fact that the horizontal deflection of the joint 26 at the end of the crank 5 is symmetrical and the deflection of the joint 25 of the connecting rod 4 and the lever 3 is one-sided, the difference in these deflections is in relation to the length of the connecting rod 4, there is a difference in the angles α1 and β1 of the connecting rod 4 for different phases of raising and lowering the wing 1. If the connecting rod 4 with the lever 3, the wing beam 2 and the stick 6 form a parallelogram, a direct transfer of the angles α1 and β1 from the connecting rod 4 is achieved on wing 1 without changing their α2 and β2 values. If there is kept the parallelogram topology but changed the dimensions of the elements, this will affect the transfer of angles. For example, a slight extension of the wing beam 2 causes the wing 1 to point slightly downwards in the upper position and the wing 1 to point slightly upwards in the lower position, while maintaining the maximum angles α2 for lowering and raising β2 of the wing 1, also with a smooth transition of angles α2 and β2 by the neutral phases. Such a properly selected modification improves the operation of the system because it facilitates the turning of wing 1, reducing the jerk effect, but the reaction should not be too strong so as not to cause too much aerodynamic resistance. For variants 1.1.1, 1.1.2, 1.1.3, the difference in deflections described above in the level of the joint 25 to the joint 26 also gives a particularly practical distribution of forces, because for the crank 5 located in the rear position, the angles α2 and β2 of the wing 1 are smaller than for front position of the crank 5, so in the rear position the wing 1 is lowered and the connecting rod 4 then has an angle close to the vertical Z, which is also close to the joint path. The above phenomenon results in improved transfer of forces, especially when lowering wing 1, when the forces acting on wing 1 should be higher than when raising wing 1. The presented variant of the invention used in predictable and quite easy flight conditions, supported by stabilization methods: appropriate inertia of the fuselage 8, additional stabilizing wing 9, piezoelectric stabilizer or gyroscope 10 influencing the empennage 11 and maybe even the aileron, allows to largely use the potential of the invention and propel aircraft with a slight underestimation of the values of the angles of attack α2 and β2 for lowering and raising wing 1.

In the case of subvariants 1.2.1, 1.2.2, 1.2.3, there is an analogy to subvariants 1.1.1, 1.1.2, 1.1.3, in that the third number describes the corresponding subvariants in terms of the location of the movable joint 28 of the stick 6 and this rule is met up to subvariant 1.8.3. Subvariants 1.2.1, 1.2.2, 1.2.3 are characterized and differs from the first three subvariants by the location of the joint 24 of the lever 3 and the body 8 between the other two joints 23 and 25 of the lever 3. The remaining features correspond to the features of the three previous sub-variants, i.e. the joint 24 is in front of the wing 1 and the crank 5 below the wing 1. The crank 5 rotates so that its end - the joint 26 - rises in the rear position. However, this difference in the intermediate position of the joint 24 on lever 3 and connecting rod 4 causes the value of the angle of attack α2 when lowering wing 1 to be greater β2 than when raising wing 1. This applies when the angle of attack of wing 1 in the neutral position is positive, i.e. wing 1 is upturned or the profile of wing 1 is strongly convex upwards or when developmental variants are used.

Subvariants 1.3.1, 1.3.2, 1.3.3 are topologically equivalent to subvariants 1.1.1, 1.1.2, 1.1.3, but the elements are oriented differently, i.e. the wing 1 is in front of the joint 24 and below the crank 5, which rotates so that the joint 26 at its end lowers in the front position when the rotation is correct. The inequality of the angles of attack α2 and β2 during operation is consistent with the assumptions of correct flight. In terms of topology, subvariants 1.4.1, 1.4.2, 1.4.3 correspond to subvariants 1.2.1, 1.2.2, 1.2.3, but the elements are oriented differently, i.e. the wing 1 is in front of the joint 24 and below the crank 5, which in the correct turn is rotated so that the joint 26 at its end is raised in the forward position. The value of the angle of attack α2 of wing 1 in subvariants 1.4.1, 1.4.2, 1.4.3 is greater when lowering it than β2 when raising it. Subvariants 1.5.1, 1.5.2, 1.5.3 also topologically correspond to subvariants 1.1.1, 1.1.2, 1.1.3, but the crank 5 is above the average position of wing 1 and the joint 24 of the lever 3 with the fuselage 8 is in front of wing 1. The rotation takes place in such a way that the joint 26 at the end of the crank 5, when it is at the front, lowers and then the angle of attack α2 of the wing 1 when lowering it has a value greater than β2 when it is raising it. Subvariants 1.6.1, 1.6.2, 1.6.3 correspond topologically to 1.2.1, 1.2.2, 1.2.3, but the crank 5 is above the average position of wing 1 and the joint 24 of the lever 3 with the fuselage 8 is in front of wing 1. Rotation is done in such a way that the joint 26 at the end of the crank 5, when it is at the front, rises and then the angle of attack β2 of the wing 1 when it is raised has a value greater than α2 when it is lowered. Subvariants 1.7.1, 1.7.2, 1.7.3 also topologically correspond to subvariants 1.1.1, 1.1.2, 1.1.3, but the crank 5 is below the average position of the wing and the joint 24 of the lever 3 with the fuselage 8 is behind the wing 1. The rotation takes place in such a way that the joint 26 at the end of the crank 5, when it is at the rear, lowers and then the angle of attack α2 of the wing 1 when lowering it has a value greater than β2 when it is raising it. Subvariants 1.8.1, 1.8.2, 1.8.3 correspond topologically to 1.2.1, 1.2.2, 1.2.3, but the crank 5 is below the average position of the wing and the joint 24 of the lever 3 with the fuselage 8 is behind the wing 1. The rotation takes place so that the joint 26 at the end of the crank 5, when it is at the rear, rises and then the angle of attack β2 of the wing 1 when it is raised has a value greater than α2 when it is lowered.

While still describing the basic variant, but in particularly simplified sub-variants 1.9.1, 1.9.2, 1.9.3, 1.9.4, the previous logic has been abandoned because it is not applicable to these sub-variants, due to the fact that the stick 6 is movably connected with fuselage 8, which means that regardless of the direction of rotation of the crank 5, when the elements of the mechanism 12 form a parallelogram, the angle of attack α2 and β2 of the wing 1 is constant at every moment of operation of the mechanism 12. This applies to specific wing 1 profiles or development variants. In sub-variant 1.9.1, the crank 5 is below the wing 1 and the joint 24 of the lever 3 with the fuselage 8 is in front of the wing 1 and behind the movable connection 25 of the lever 3 and the connecting rod 4. In the sub-variant 1.9.2 the crank 5 is below the wing 1 and the joint 24 of the lever 3 with the fuselage 8 is in front of the wing 1 and in front of the movable connection 25 of the lever 3 and connecting rod 4. In subvariant 1.9.3, the crank 5 is above the wing 1 and the joint 24 of the lever 3 with the fuselage 8 is in front of the wing 1 and behind the movable connection 25 of the lever 3 and the connecting rod 4. In subvariant 1.9.4, the crank 5 is above the wing 1 and the joint 24 of the lever 3 with the fuselage 8 is in front of the wing 1 and before the movable connection 25 of the lever 3 and the connecting rod 4. All of the described sub-variants have their applications, some of them obtain particularly good operating properties only in development versions, for example those in which the angle of attack α2 when lowering wing 1 is greater than the angle of attack β2 when raising wing 1. This difference can be compensated for in the standard variant by generating excess thrust and by the empennage 11 rotating the fuselage 8 so that the nose is up or, in development variants, accelerating the operation of the crank 5 in the phase of lowering the wing 1, for example in variant 3 using the spring element 14.4 and in development variant No. 7 by accelerating the operation of motor 7 when wing 1 is lowered. In all sub-variants of the first implementation variant, the motor 7 rotates the crank 5 directly, so in the case of an electric motor 7, one with a relatively large diameter and short length should be used, as it provides the desired high torque and low revolutions, in the case of an internal combustion engine 7, these are desirable also the above properties. Any other type of motor 7 can be used. All the above implementation examples in various variants and sub-variants can be combined with each other, i.e. freely divided and combined, dividing and combining the features of individual solutions.

The second implementation variant - protected by the second patent claim - is already a development variant relating to any sub-variant of the base variant, then the first number from the variant name changes to "2" and, for example, the first base sub-variant equipped with a gearbox is marked 2.1.1. The development involves the use of gear 13 in the drive between the motor 7 and the crank 5. While in the basic variant the crank 3 is rotated directly by the low-speed motor 7 and the crank axle 27 is the axle of the motor 7, in variant 2 the crank axle 27 remains marked a the axle 22 of the motor 7 may be coaxial with the gearbox if, for example, a planetary gear 13 or a specific type of gear transmission is used. The axle of the motor 22 may also be shifted in the case of a belt or chain transmission or even rotated relative to the crank 5 axle 27, for example in an angle or worm gear 13. The gear 13 can be without changing the gear ratio, i.e. 1:1, when, for example, there is a need to distance the motor 7 from the crank 5, or it can adopt different gear ratios, including changing the turning direction. The gear 13 may also have a variable gear ratio smoothly or stepwise. It may also have a clutch and operating clearance. The operating clearance can also be controlled to, for example, prevent stalling when the wing 1 is subjected to the air flow. The clutch or freewheel in the gear 13 or without the gear 13 may work similarly - when the air flow entrains the wing 1, the freewheel or the controlled clutch causes the wing 1 to take a neutral position faster. The gear 13 plays an important role in the invention, which is in the field of aviation, and in small and light motors 7, high power is easily obtained by setting them at high speeds, which are definitely too high for the realities of the present invention. By reducing the revolutions, the necessary high torque is obtained. In the invention, a gear 13 resistant to heavy loads, mainly momentary loads, i.e. a belt, chain or planetary gear, works particularly well because in them the forces are distributed over many teeth and relatively long circumferences of wheels, belts or chains, it can be attached 31 to the frame 8 or to the motor 7. The invention may use an automatic transmission 13 with a smoothly changing gear ratio depending on the load, analogous to that used in combustion scooters, where with a lower load, the output shaft is set at higher revolutions, and with a higher load - slower revolutions with a higher torque. Such implementation, with a sufficiently short reaction time of changing the gear ratio to a change in load, may result in greater stability in flight, because when the wing 1 is carried away by the air stream, the motor 7 accelerates it even more through the gear 13 and the mechanism 12, which allows the wing 1 to bend more easily and quickly adopt a neutral position and an angle opposite to that causing the stall.

The third implementation variant includes the development of any of the previous subvariants so that some or all of the rigid elements of the mechanism 12 are replaced with flexible elements and some or all of the movable joints are replaced with non-motion connections or flexible connections and a device for adjusting the elasticity and working length 14 added to the rod elements of the mechanism 12 and the joints, which can be set before the flight or during the aircraft flight. The above development is presented in three sub-variants 3.1 concerning the lever 3 and its connection 24 with the fuselage 8, sub-variant 3.2 concerns the connecting rod 4 and its joint 25 with the lever 3, sub-variant 3.3 concerns the crank 5 and its joint with the crank axis 27. The elasticity introduced into the swinging movement gives the possibility of storing energy in the phase of raising wing 1 and using it when lowering wing 1, when a higher energy expenditure but also a faster pace is needed, especially in subvariants in which the angle of attack α2 when lowering wing 1 is greater than β2 when raising wing 1. Sub-variant 3.1 is presented in three subsequent sub-variants in the hierarchy, differing in the third number: 3.1.1, 3.1.2, 3.1.3, in which the difference lies in the method of implementation and the obtained effect of operation within the mentioned sub-variants is similar, i.e. a change in the working length of lever 3 and the position of its joint 24 with the fuselage 8 and the introduction of flexibility, makes it possible to change the range of movement of the wing 1 by changing the gear ratio of the lever 3, changing the division of the angles α2 and β2 and using the flexibility to better expend the work of the motor 7 and appropriate distribution of energy during the operation of the system, this corresponds to the need for uneven load on the mechanism 12 with uniform operation of the motor 7. Thanks to the elasticity, it is possible to bring the elements into a resonance that favors the operation of the system, especially when changing the direction of movement of the wing 1, especially when the neutral position in terms of the forces obtained from the elastic elements 14.4 for the lever 3 is close to its horizontal position. Individual sub-variants 3.1.1, 3.1.2, 3.1.3 have a device for adjusting the elasticity and working length 14 in a different way. Sub-variant 3.1.1 is a modification of the basic variant from 1.1.1 to 1.9.4, consisting in replacing the rigid lever 3 by an elastic element rigidly attached 24 to the hull 8 and adding a slide to adjust the elasticity 14.1. The elastic element can be made, for example, as a composite elastic strip in its entirety, or only on the mounting, or as an elastic element in part of the bar element. In this way, the elasticity of the element simultaneously changes and the actually functioning joint 24 moves. Subvariant 3.1.2 is also a modification of the entire basic variant, also within the connection 24 of the lever 3 and the body 8, only obtained by adding an adjuster for step changes of the joint position 14.2 and optionally added flexible component 14.4. The adjuster for step changes of the joint position 14.2 can be implemented, for example, as rod elements with a series of holes for the pin, which, inserted through the holes in both elements, serves as the hinge axis 24; the pin can also be extended automatically during operation, i.e. when both the pins are in their positions for both elements, one is retractable and the other is retractable. The series of holes should be selected so that in both elements there are corresponding holes distributed so that the geometry of the system provides the function assumed in the invention. Subvariant 3.1.3 is also a modification of the entire base variant, also within the joint 24 of the lever 3 and the fuselage 8, only achieved by an added adjuster for variable changes of the joint position 14.3 and optionally added flexible component 14.4. Added flexible component 14.4 in all sub-variants they can be made as springs or rubbers or pneumatic or magnetic actuators or other actions, with the possibility of adjusting the forces. The adjuster for variable changes of the joint position 14.3 can be made as rollers and a raceway or, for example, as gears and linear racks, where the rollers or gears have their displacement on the raceway or linear rack synchronized with their rotation. The roller or gear 14.3 may be single with a pressure element - spring or, for example, magnetic. As part of variant 3.1, stabilization can also be introduced, consisting in automatic, mechanical adjustment of the angles of attack α2 and β2 of wing 1 to the air stream speed by using the stabilizer and aerodynamic brake 14.9, shown in Fig. 3.1.1.2, which is an extension of the basic sub-variants 1.1. but it has its application for all sub-variants of the solution having joint 24 at the front of the mechanism 12, because the faster air stream, carrying away the stabilizer and aerodynamic brake 14.9, shortens the arm, which increases the range of movement of the wing 1, improving inscrible the angle of a profile of the wing 1 in the air stream. This development is used together with the tensioners 14.4 which hold the spring and working length adjuster 14 in its original position at medium air flow speed. If the joint 24 is located at the rear of the mechanism, a lever or cable changing the sense 14.8 is needed to reverse the effect of the stabilizer and air brake 14.9. Subvariants 3.2.1, 3.2.2, 3.2.3 are solutions in terms of the means used, analogous to 3.1.1, 3.1.2, 3.1.3, only they concern the connecting rod 4 and the joint 25 of the lever 3 with the connecting rod 4. All elements of the mechanism 12 except the crank 5 and the connecting rod 4 move in relation to the interconnected elements in a pendulous motion, the connecting rod 4 in relation to the beam 3 also moves in this way and in all these cases, the solutions of the third variant previously indicated apply to each kinematic pair. Within the joints 26 of the connecting rod 4 and crank 5 and the crank axis 27, the movement is rotational, where the elements perform multiple revolutions with an unchanged direction. Due to the above operating characteristics, the third variant in the case of crank 5 differs in terms of its technical solution. The crank 5 transmits the drive by rotating, therefore the operating cycle of the wing 1 also depends on its cycle, so that within one complete crank cycle there are two movements of the wing. The modification of the crank 5 in the third variant is intended to distribute the work of the crank 5 so that the energy stored in it serves the uneven demand for the operation of the system but also counteracts stalls, because when the wing 1 is lifted by an air stream, the flexibility of the element or controlled play causes that wing 1 gets the neutral position faster. Subvariant 3.3.1 is analogous to subvariant 3.1.1, only the joint at which flexibility occurs is the crank axis 27 and the rotation of the end of the crank 5 in relation to it - as joint 26 and in some cases joint 28. The elasticity of such a crank substitute 5 is controlled by the slide for adjusting the elasticity 14.1. The next sub-variant 3.3.2 presents the possibility of storing even more energy in a larger range of rotational movement, thanks to the use of a spiral elastic element that indirectly transfers the drive from the crank axle 27 to the end of the crank 26, which is a special case of the added flexible component 14.4. This last sub-variant can also be equipped with adjustment of the elastic force and spring tension length, clutch, clearance, shock absorber along with adjustment of individual operating parameters of the crank 5. Power transmission through the crank 5 within sub-variant 3.3 can also be done by using damping and smoothing the movement of elements elastic, pneumatic, hydraulic, magnetic, inertial.

The sub-variants given above can be implemented jointly or alternatively, and each other element of the mechanism 12 can be modified in accordance with the above description, for example, instead of adding elastic elements 14.4 on the joint 25 of the lever 3 and the connecting rod 4, they can be added on the joint 23 of the beam 2 and the lever 3, obtaining including the same or similar actions that can also be achieved within the joint 29 of the beam 2 and the stick 6. They can be pre-set manually or mechanically, the controller can be manual or robotic and continuously controlled.

The fourth variant of implementation consists in developing the basic variant or the second variant or the third variant in any sub-variants of the previous variants by introducing an additional intermediate mechanism or an additional intermediate drive 15, which, using the movement of the crank 5 or connecting rod 4, transforms it and translates it onto the wing beam 2 using the stick 6 so as to influence the change in the angle of attack α2 and β2 of wing 1. There is an additional intermediate mechanism or an additional intermediate drive 15 and an additional stick 16 intended to mediate and transform the transmission in order to more diversified change the angles of attack α2 and β2 of the wing 1. The assumption of the fourth implementation variant can also be met within subvariant 4.2.1 with an additional intermediate mechanism or an additional intermediate drive 15 located under or above the wing, depending on the base variant, with the stick 6 attached directly to the wing 1. In turn, sub-variants 4.3.1 and 4.3.2 contain solutions with the arrangement of elements as in sub-variant 4.2.1, only with a simplified structure thanks to the lack of lever 3 and stiffening of the connection of wing 1 with the connecting rod 4 in variant 4.3.1 and stiffening of the connection of wing 1 with stick 6 in variant 4.3.2. The implementation of these sub-variants can be alternatively made in such a way that part of the system of the connecting rod 4, beam 2, wing 1, stick 6 can be rigid and the flexible part corresponding in function to the joint 23 or 29. In the above variants, beam 2 is identical to wing 1 in the diagrams and parallel to it. An additional intermediate mechanism or additional intermediate drive 15 can be implemented as a motor or servo 15.7 electronically synchronized with the operation of the crank 5, as presented in variant 4.0.2. Variants 4.0.3, 4.0.4 and 4.0.5 contain a mechanical drive transmission using, for example, gears or rollers 15.3 with an idler wheel 15.3.3, which gives the appropriate rotation to the additional crank 15.5. such an implementation may be possible without an additional roller or gear wheel, but the cranks 5 and 15.5 will move in the opposite direction, which will cause unfavorable forces during the operation of the system. In another example of mechanical transmission as part of an additional intermediate mechanism or additional intermediate drive 15, a belt or chain 15.19 is proposed, which may have an introduced tension roller 15.3 causing a change in the working length of the currently stretched part of the belt or chain, which results in a shift in phase of the additional crank 15.5 relative to the crank 5, and the drive from the axis 27 of the crank 5 can be transferred by a belt or chain 15.19 using pulleys or gears. Subvariant 4.0.5 includes a cam roller 15.3 as a variant enabling the differentiation of the attack angles α2 and β2 within the cycle due to the nonuniform tension of the belt or chain 15.19 within the rotation of the roller 15.3.3 and, consequently, a variable shift in the phase of movement of the cranks 5 and 15.5 in the cycle. In order for the cam roller 15.3.3 to operate repeatably in each cycle, its circumference should be equal to the circumference of the driving wheel and the wheel receiving the drive 15.3. All of the above implementation sub-variants may also meet the assumptions contained in the second patent claim, i.e. have a transmission both on the axle 27 of the crank 5 and on an additional drive or intermediate mechanism 15 or 15.7. The specific application of these solutions is in subvariants based on 1.9.1, 1.9.2, 1.9.3, 1.9.4.

An additional intermediate mechanism or an additional intermediate drive 15 can be implemented as a mechanism driven from the mechanism 12 by an additional stick 16 and convert the reciprocating movement of the additional stick 16 into the reciprocating movement of the stick 6. An additional intermediate mechanism or an additional intermediate drive 15 may alternatively be driven from the axle 27 of the crank 5 through, for example, a gear transmission, a shaft, a system of rods, a belt transmission, a chain transmission, which may be, for example, an additional crank 15.5 driving the stick 6 and setting the angle of attack α2 and β2 of wing 1. The stick 6 can be moved by an additional drive 15, which is an additional motor or a servo electronically synchronized with the elements of the mechanism 12. An additional intermediate mechanism or additional intermediate drive 15 may be attached to the base, i.e. in the case of the mechanism, it is the fuselage 8, but it may alternatively be attached to other movable elements of the mechanism 12, such as, for example, connecting rod 4, stick 6, lever 3, wing beam 2, wing 1. The inertia of elements and resonance can be used to operate the mechanism, the mechanism can be damped and its operating parameters can be controlled. The most reliable and universal implementation is the mechanical determination of the operation of the additional intermediate mechanism 15, which is independent of the mechanism's operating speed, but inertial elements can also be used to dampen or strengthen the mechanism's operation and, at higher operating frequencies, obtain smaller ranges of movement of the stick 6 and, as a result, smaller angles of attack α2 and β2 of wing 1 or, in the case of powering, increased values. This documentation presents an additional intermediate mechanism 15 as an additional lever with variable fulcrums 15.1, which translates the roughly reciprocating movement of the additional stick 16 into the roughly reciprocating movement of the stick 6, also roughly reciprocating, but with changed parameters. One of the proposals for an additional intermediate mechanism or additional intermediate drive 15 involves the use of an additional lever 15.1 with a linear holes for pins and variable fykcrums 15.2, which can be implemented as pins that are placed in alternative holes for adjustment or moved in steps distances so that they hit the holes or gears with a shift synchronized with their rotation, so that they hit the appropriate places of the gears on the additional lever 15.1. The variable fulcrums 15.2 may alternatively be rollers 15.3 with a track on an additional lever 15.1. The variable fulcrums 15.2 can operate simultaneously only in a specific phase of operation of the additional mechanism 15, this position is the planned position of the additional lever 15.1 in the line of the variable fulcrums 15.2 which in a typical implementation are vertical. The described implementation of the additional mechanism 15 operates in such a way that it is a lever mechanism 15.1 with a variable transmission ratio depending on the phase of movement of the additional rod 16, which depends on the phase of movement of the crank 5, which is related to the phase of movement of the wing 1. Stick 6 and the additional stick 16 transfers the work essentially along these elements, i.e. the sticks 6 and 16 can push or pull the element. In the case of two wariable fulcrums 15.2, due to the fact that the lever is pulled or pushed by an additional stick 16 and is supported only on one side of the fulcrums 15.2 and that a tensioner 15.4 with or without a roller 15.3 is provided, one actuates within the lever 15.1 transmission or second fulcrum 15.2. Therefore, depending on the phase of the crank 5, the additional stick 16, by pulling or pushing the lever 15.1, gives different gear ratios of the mechanism. For proper operation of the additional mechanism 15 in the case of two additional fulcrums 15.2, the tensioner 15.4 with the optional roller 15.3 is required. Thanks to the roller 15.3 rolling on the raceway, losses related to the operation of the mechanism are minimal because the roller 15.3 has the minimum distance for mounting the tensioner 15.4. Additionally, to make it more efficient, the raceway for the roller 15.3 can be formed into a curved section, e.g. an arc. If the roller is omitted and the tensioner 15.4 is permanently attached to the additional lever 15.1, a certain change in the distribution of forces during the system operation cycle must be taken into account. As part of this additional mechanism 15 solution, it is also possible to use a system with synchronized pins 15.2 that extend and retract at the appropriate moment, or a system of latches or a hinge such as that commonly used in swing doors. Fig.4.1.1.1 shows a close-up of the mechanism for subvariant 4.1.1, which is a development of the base subvariant 1.1.1, but such a modification may apply to any of the previous subvariants. The additional lever 15.1 can also change the direction of work from the additional stick 16 to the stick 6. This occurs when the variable fulcrums 15.2 are between the connection of the additional stick 16 with the additional lever 15.1 and the connection of the stick 6 with the additional lever 15.1. The above-described change of rotation of the stick 6 in relation to the additional stick 16 results in the conversion of angles α2 to β2 or vice versa, which may be useful in the case of developing base subvariants for inverted proportions of attack angles α2>β2. In such a modification, in order to ensure proper operation, the direction of rotation of the crank 5 should be reversed. Within one implementation, it is also possible to combine the improvements from the fourth variant with the third and second variants, for example by using the gear 13 from the second variant, adjusting the angles of attack α2 and β2 of the wing 1 from the fourth variant with the regulation of the proportions of angles α2 and β2 and the introduction of flexibility from the third variant, and an additional intermediate mechanism or additional intermediate drive 15 may have the position of all or some elements or joints modified using the stabilizer and aerodynamic brake 14.9 or stabilizing arrow 17.10.

The fifth embodiment protected by the fifth patent claim consists in using a suspension 17 for some or all of the elements of the previous embodiments. Mechanism 12 and, above all, the moving wing 1 and their inertia cause forces F3, which can be suppressed or used by distribute them in time. In the case of forces unfavorable to flight, they can be dampened by the relatively large mass of the fuselage 8 and the suspension 17, which can reduce or store and then transfer the work obtained from the forces to the system. In these sub-variants of the invention, which have a joint 24 of the lever 3 and the fuselage 8 in front of the wing 1, there are torques that favor the setting of the correct direction of the angle of attack α2 and β2 of the wing 1. If a carrying wing 1 was made, these angles α2 and β2 would be too high and obtained too quickly in relation to the position of wing 1, so in order to distribute these forces in time and adopt appropriate angles of attack α2 and β2 synchronized with the pendulous movement of wing 1, it is worth using suspension 17. The suspension 17 may concern the entire mechanism 12 along with development variants or individual connections to the fuselage 8. It may be implemented independently for each connection or function as an integral whole. The suspension 17 may be spring, inertial, pneumatic, hydraulic, friction, mechanical, mechatronic, magnetic elements, and may use the resonance phenomenon. It can have initial and current control of operating parameters. An example of such an implementation may be one of the sub-variants with varied but lowered values of the angle of attack α2 and β2 of wing 1 or with constant angles such as 1.9.1, 1.9.2, 1.9.3, 1.9.4, and the suspension may be a flexible tail made, for example, of springing strip, so that the entire fuselage 8 together with the tail acts as a suspension 17 in which the resonance phenomenon can be used to adopt appropriate angles α2 and β2 of the wing 1 relative to the tail of the fuselage 8. In addition to such simplified implementations as the suspension 17 described above, it can also be used for advanced control of flight parameters. For example, when the joint 24 of the lever 3 and the fuselage 8 is mounted on the steerable suspension 17, giving some vertical controllable freedom to this joint 24 reduces the range of wing movement, which allows the movement parameter of the wing 1 to be alternatively adjusted to the flight parameters. An example of the implementation of the fifth variant may also be any sub-variant from group 1.1 or 1.2 or 1.5 or 1.6 with reduced attack angles α2 and β2 of the wing 1 or 1.9 with the overall suspension 17 of the mechanism 12 to the fuselage 8, so that the suspension has spring and inertial elements and damping and controlling suspension operating parameters such as operating range, reaction time, distribution of forces over time makes it possible to control the angles of attack α2 and β2 of the wing 1 relative to the fuselage 8.

The solution from this variant may provide specific control and stabilization of the aircraft's flight as in variants 5.0.1, 5.0.2, 5.0.3, using a suspension 17 to control and stabilize the flight in the longitudinal axis X by balancing on the suspension 17 with the weight of the fuselage 8 relative to the wing 1. The first of these sub-variants is a solution enabling the rotation of the wing 1 in the longitudinal axis X where suspension is between the beam 2 and the wing 1, the second variant is shifting the fuselage 8 alonge wingspan Y andt the last one is a suspension 17 placed on the top of the mechanism and around it the fuselage 8 is swinging as a weight 17.8.8 on the additional beam 17.1. Another solution for flight control and stabilization using suspension 17 is subvariant 5.1.4, which is a modification of the position of the joint 24 attaching the lever 3 to the fuselage 8 by moving it essentially longitudinally X. This action may occur automatically - as a result of the forces acting on the wing 1 causing the stall as shown in Fig. 5.1.5.2, where the forces leading to the stall lift the wing and move the joint 24 along the suspension beam 17.1, meeting the resistance of the tensioner 17.4. The above-mentioned displacement of the joint 24, which softens the angle of attack α2 or β2 of the wing 1, can also be caused by an additional drive as in claim 4 or a special stabilizing arrow 17.10, which has inertia thanks to the bob 17.8.8 and is subject to the air flow thanks to the arrow stabilizers 17.9. The use of the arrow 17.10 to change the angle of attack α2 and β2 can also be achieved in the previous variants, for example to move the stick 6 in the fourth variant, where the arrow 17.10 serves as an additional intermediate mechanism or drive 15. The arrow 17.10 can alternatively be implemented as literally a gyroscope with mechanical transmission of forces or a piezoelectric sensor with a drive or a servo replacing the mechanics. The suspension drive 17.7 can be controlled analogously to the tail 11 of the first claim and can move the connection 28 of the stick 6 with the fuselage 8 or the connection 24 of the lever 3 with the fuselage 8.

The sixth implementation variant involves replacing the elements moving in arcs and circles with more free tracks, with the possibility of modifying these tracks, which translates into more options for setting the system's operating parameters and even miniaturization. The principle of operation remains consistent with any previous sub-variant, only the joint 26 at the end of the crank 5 and the joint 28 through which the stick 6 or the additional stick 16 are driven have a track that can deviate from the circle and the principle of operation remains the same as in the previous variants, i.e. the deflection of the joint 26 in the horizontal direction translates into the angle of attack α2 and β2 of the wing 1, and the deflection of the joint 26 in the vertical direction translates into essentially moving the wing 1 in the vertical direction. The crank 5 can be replaced, among others, by a cam-guide or guide wheel system 18 and a belt or chain 19 to which the joint 26 or joints 26 and 28 are attached. By changing the shape of the cam-guide 18 or the position of the guide wheels 18, the track of joint 26 or 26 and 28 is modified and, and also consequently the vertical movement rate of wing 1 and the values of the angles of attack α2 and β2 for individual phases of wing 1 movement. As part of the sixth variant, it is also possible to replace the lever 3 with a guide or cam 18, so that the wing beam 2 is movable joined 23 to this guide and the other end of the wing beam 2 is attached to the joint 26 at the end of the crank 5 or to a chain or belt 19. In practice, this gives the difference in deflection translated into the angles of attack α2 and β2 of the wing 1, the principle of operation of which is consistent with the basic assumptions of the invention only with the use of alternative means. In this variant, the beam of the wing 2 does not have to be straight and the line of the beam 2 determined by its ends does not have to be perpendicular to the wing 1, similarly in any other variant of implementation. The stick 6 can be omitted and then the joint 29 at the end of the beam 2 becomes identical with the joint 26 or 26 and 28 or 26 and 29.

The seventh implementation variant is a very important development variant, because together with the base variant and possible subsequent variants, it includes a dedicated electronic flight control and stabilization system, which allows the full potential of the previous variants to be fully exploited, especially in terms of energy effectiveness, starting from the control of the base variant, through the ability to control the operating parameters of subsequent mechanical variants. The control system in the present invention is almost as important as in the inverted pendulum, because only without the stabilizing wing, but together with the electronic flight control and stabilization system, it is possible to operate at optimal parameters, with minimal drag and maintaining flight stability, which allows for the optimization of energy expenditure and acquisition. It can be used, similarly to the previous development variants, also in other types of ornithopters, such as, for example traditional bird-like omithopter, then the flapping movement of the wings 1 is equivalent to essentially shifting the wing 1 vertically, and the change in the angle of attack of the flapping wings 1 is equivalent to the change in the angle α2 and β2 of movable wing 1 on this invention. The main role of the flight control and stabilization system is to regulate the system's operating parameters so that it responds as best as possible to its operating conditions and user Q commands. While the basic variant and the remaining development variants, except for the seventh one, use initial settings-parameters P1, the current settings - parameters P2 would have to be controlled by the user Q, i.e. be an open regulation system. Considering the frequency of operation of the system, it is very difficult for a human to master both the current control of the flight path and the target parameters P2 of the system, and even unrealistic for typical user Q. For selective operating parameters, mechanical control systems are implemented in the second variant through the working clearance, freewheel or automatic transmission 13, in the third variant through a device for adjusting the elasticity and working length 14, adjusted with a stabilizer and aerodynamic brake 14.9, and in the fourth variant through a stabilizer and aerodynamic brake. 14.9 or arrow 17.10 or an additional intermediate mechanism 15 and arrow 17.10, can also move the suspension 17 of the joint 24 connecting the lever 3 with the fuselage 8, or other elements providing a similar effect. During flight control and stabilization, the system has two goals mentioned in the name: To release the Q user from performing such difficult and risky activities, it is necessary to maintain the stability of the ornithopter in flight, but also to achieve other goals, i.e. increasing the effectiveness of energy expenditure and acquisition. Static stability using the invention is easiest to achieve by lowering the angles of attack α2 and β2 of wing 1 with the use of an additional stabilizing wing 9, but this involves some energy losses. Without a control system, it is virtually impossible to optimize efficiency while maintaining stability. This results directly from the basis of operation of the invention, i.e. alternating two phases of flight: propelling the gliding wing 1 and returning the wing 1 to the upper position. In both phases, the angles α2 and β2 should be adjusted to the path of wing 1 in the air flow so as not to cause unnecessary energy losses and not to cause the aircraft to stall. The tolerance of these angles of attack α2 and β2 in practice is slightly small, i.e. in the case of a slow-flying plane, about 1 degree, and in the case of ships flying much faster, i.e. about 100 km/h, the value of the permissible angle error is much lower. Exceeding the permissible error range by underestimating the angles of attack α2 and β2 of wing 1 results in a reduction in the drive efficiency, while increasing the angles α2 and β2 beyond the error limit results in wing 1 being immediately carried away by the air stream in the direction it is directed, and the ceiling changes dramatically. ship, and the entire ship rotates so that it stalls, resulting in a disaster. The unfavorable rotation of the aircraft occurs because wing 1 is subjected to a significant force attached to the wing 1, and the inertia of the tail causes the wing 1 to move vertically, leaving the tail at its current height. This phenomenon can be prevented to some extent by using a canard arrangement, as the inertia of the nose will counteract the torques that lead to stalls, but this airframe arrangement also requires a specific control system. Due to the above, the system should, first of all, automatically select the operating parameters of the aircraft on an ongoing basis so that in real, i.e. variable flight conditions, the movement of wing 1 together with the angles α2 and β2 responds as best as possible to the movement path of wing 1, enabling the control of the aircraft's path in the air. Due to the above, the system should, first of all, automatically select the operating parameters of the aircraft on an ongoing basis so that in real, i.e. variable flight conditions, the movement of wing 1 together with the angles α2 and β2 responds as best as possible to the movement path of wing 1, enabling the control of the aircraft's path in the air. The initial parameters of P1 can be controlled electronically, set mechanically-manually or by selecting the dimensions of the elements of the mechanism 12 or the elements of development variants. An electronic control system was proposed, the essential element of which is an electronic controller 21 programmed to process data obtained from sensors 20 reading the state of the environment, the aircraft and the operation of components, and this data, in connection with the requests T of the user Q, is processed by the controller 21 so that the aircraft performs its task through controllers 32, which control executive components 33. Actuators 33 can be added to any of the elements listed in Figure 7.0.1 and their sub-elements, or other elements of the system, or they can be an integral part of them, similarly to controllers 32. User's T requests Q may be, for example, information regarding the drive operating mode or also, in the case of more advanced software, information about desired maneuvers or even assigned flights, including flight autonomy controlled by the controller 21Flight autonomy can also be divided into an intermediate system between the user Q and the controller 21. The flow of information can be carried out using any medium, it can be, for example, an electrical, analog or digital signal via any bus, infrared, optical or radio links can also be used. The user Q may be a human or a programmed computer managing, for example, a swarm of unmanned vehicles. The special elements of this system are the electronic controller 21, communicated with the user Q, which reads information from various components and the environment via sensors 20 and sends the processed information via drivers 32 to the executive components 33, of which motor 7 is a special component in terms of controlling the component. The controller 21 can be implemented as an electronic microcontroller, a deterministic or quantum microcomputer, electronic optical or based on other phenomena, based on any system platform. Control algorithms corresponding to functional assumptions can be strictly determined, supplemented with machine learning, based on machine learning or artificial intelligence.

Claimed functional diagram shown in Fig.7.0.1, which includes blocks with individual components and possible connections indicating the flow of information as dashed arrows and power supply as solid arrows. The number of arrows does not indicate the exact number of connections, but rather the possible connections and proportions in the exchange of information, so they can be freely multiplied or reduced, similarly to the power supply. The most important elements that appear in this illustration and in this variant are the electronic controller 21, which is the basis for the operation of the control system, but also sensors 20, which can be in different numbers and collect information from various sources. In the case of motor 7, the sensors 20 can operate on the basis of the current consumed, inductive, thermal, optical, magnetic, mechanical encoders, the remaining sensors 20 can be implemented like the sensors 20 of motor 7, but also be aerodynamic, ionizing, for any waves, also detecting polarization, acoustic , pressure, inertial, photogrammetric, laser, geolocation, contacting the controller in various ways 21. The pitch and roll sensor 20 of the fuselage 8 is also very important, as well as the inertial velocity sensor 20 and the air velocity sensor 20 because, together with the sensor 20 of the motor 7, they allow for full control and stabilization of the flight. The remaining sensors 20 may also be important depending on the implemented variant. The electronic system does not have to be entirely centralized in the controller 21, because, for example, the driver 32 of the engine 7 and the power supply system may have such autonomy. This solution is even more advisable because it does not burden the controller 21 with high currents or voltages and is often already implemented in ready-to-purchase modeling components. The power supply in any implementation variant can be controlled in a centralized, independent or distributed manner. In real conditions, factors can change very dynamically, for example due to air turbulence, and then the response to such changes should be very quick. The mechanical reaction occurs when a stall begins to occur, so it is still necessary to underestimate the angles of attack α2 and β2 somewhat. Intermediate development variants include such an option through a possible freewheel, working clearance, work storage, or clutch in variants 2, 3, 4, and devices 14.9 and 17.10 that respond to environmental conditions and change operating parameters in variants 3, 4, 5. Using an electronic flight control and stabilization system, it is possible to program the controller 21 so that a possible destabilization of the flight is anticipated even before it happens, which allows for a continuous flight with optimally selected angles α2 and β2 of the wing 1 to the pace of operation of the motor 7 in the air stream. Correct and quick diagnosis of the problem is important, and the biggest problem when driving effectively is the high risk of stalling. And since the stall occurs as a result of the wing 1 being carried away by the air, forces and torques with a direction consistent with the direction of the drive occur on the crank 5 and the crank axle 27. Therefore, the state just before stalling can be read, for example, by the result of unloading the drive, i.e. increased revolutions of the motor 7 with constant control, or by changing the winding resistance, which occurs as a result of changing the load of the operating electric motor 7. Such sensors 20 can be implemented as an encoder on axis 27 of the motor 7, an encoder on the axis 27 of the crank 5 or sensors 20 examining the current flow in the wires supplying the motor 7 or built into the driver 32 of the motor 7 and are particularly practical in the case of electric motors 7. It is also possible to test the pressure force directly using sensors 20 placed on any element or joint transmitting the drive to the wing 1. If a load lower than typical for a given phase of movement of the wing 1 is detected, or a load with the opposite direction to the one typical for a given phase, the control system causes to accelerate the motor 7 so that the wing 1 does not drag the fuselage 8 and quickly reaches the neutral position and the opposite angle of attack α2 and β2, thus reducing the risk of stalling. Controlling the operating rate of the engine 7, but also other operating parameters of the wing, may be the result of a diagnosis consisting in examining the air speed relative to the aircraft through sensors 20, e.g. pressure sensors, which may be the most effective because it is possible to adjust the movement parameters of the wing 1 before the negative consequences of not adjusting these parameters. to flight conditions. The use of aircraft inclination sensors 20 is also important when controlling the system.

An additional advantage of the above implementations is the simplicity of execution and the ease of modifying the work thanks to software updates. It can also be possible to control both motors, i.e. the main motor 7 and the additional motor 15.7, as part of variant 4 combined with variant 7, which, with a relatively simple structure, provides high functionality, affecting not only the work rate but also the angles of attack α2 and β2. This special role of controlling the operation of the motor 7 translates into the block diagram of the control system illustrated in Fig. 7.0.1, where the orientation and arrangement of elements in the diagram do not reflect the arrangement of elements in space, which is arbitrary, they represent more symbolically the logical operation and power supply of the system, where the interaction takes place roughly from top to bottom and from left to right and during operation a kind of feedback is created, resulting from the operation of the entire aircraft in real conditions. The number and from which components the conditions and sensors 20 are read are not precisely specified in the diagram, they can be any elements and any factors, and the point of the diagram is to show only the multitude of elements. Similarly, when it comes to the execution of functions contained in the right and lower parts of the diagram, where the number of drivers 32 and actuators 33 is generally presented as plural. The flowchart shows implementation possibilities that can be partially reduced or duplicated depending on the specialized needThe diagram is valid for the case of implementation of the combustion engine 7 of an aircraft, then the engine 7 equipped with an alternator charges the energy accumulator 34, while the fuel is supplied from a separate energy source, which is not indicated in the diagram. The greatest versatility is the implementation of the invention powered by an electric motor 7, especially a brushless one, which translates into high flexibility of work thanks to the ability to quickly change the speed, but also the use of the motor 7 as a generator for charging batteries 34, which can be done through a universal driver 32 or a separate power supply module and obtaining energy from the motor 7. Just as in the case of a combustion engine 7, a separate generator can be used, in some cases of electric motors 7, where is recommended to separate the alternator. A specialized power supply module can cooperate directly with the energy accumulator 34 or use a high-capacity capacitor, which spreads the flow of high currents over time into lower ones, conducive to charging the energy accumulator 34. In the case of a combustion drive 7, any fuel can be used, including hydrogen, hydrogen cells, water electrolysis as an alternative to charging batteries, and in the case of a purely electric drive, it can be any type of cells, even photovoltaics or electrolytic cells combined with photocells, and in particular currently Lithium-ion cells and their special case of Lithium-Polymer cells. Powering the components through the regulator 32 of the motor 7 and the radio receiver is widely available, relatively cheap and used in modeling, so it can also be used in the present invention. It is also possible to combine a combustion drive 7 with an electric drive 7, thus creating a hybrid aircraft drive, analogous to cars. The structure of the electronic flight control and stabilization system described above allows, together with the previous mechanical variants, to implement operating methods that may include continuous operation modes, short-term special or emergency operations, and energy harvesting. Figures 7.0.1.1 and 7.0.1.2 show first the normal operation mode and then various alternative operation changes caused by the flight control and stabilization system. Methods of solving the problem of sudden acceleration of the air flow are presented on the example of wing 1 movement graphs in the medium, where in the second graph from the top there is an unmodified control method, which ultimately leads to a stall, in the third graph the angles α2 and β2 of wing 1 have been adjusted to the faster air flow , on the fourth - increased range of motion and on the fifth - increased speed of the motor 7. Changing the speed of motor 7 allows you to easily adapt the operating parameters to the existing or desired situation, but in practice it works to a limited extent, because reducing the speed is associated with a decrease in efficiency, and increasing the speed of the system is limited in the upper range due to the limited power of motor 7 , its durability and the efficiency of power transmission through mechanism 12 also in development variants. Within the work rate, there is a certain range of optimal operation beyond which the performance and efficiency of the drive 7 decreases; exceeding it for long flight modes is not advisable, but permissible for short modes, such as take-off, landing, hovering, stall prevention.

The system's operating modes are basically divided into three, reflecting the energy balance: in the first set, shown in Fig. 7.0.1.3, modes with a neutral energy balance, in the second set, Fig. 7.0.1.4, with a positive energy balance, and in the third set, Fig. 7.0.1.5, with a negative energy balance.. Energy balance B with a "+" sign means that the system requires energy input, for example from the energy accumulator 34, and the balance with "-" means that energy can be obtained from the system and, for example, charged the accumulator 34 "CH" or used to perform a specific work. The reference is the first mode 0.0.0.0, i.e. one with high effectiveness in maintaining flight parameters at intermediate motor speeds 7. Arrows next to the modes indicate movement in the medium, a small circle - hovering in the air, and E+ - increased drive efficiency. The presented operating modes are control methods that best use the potential of the solution and are grouped starting from the standard flight maintaining the speed V and ceiling L, from the simplest to implement, i.e. by controlling the pace of operation of the motor 7, which translates into the movement of the crank 5 with corrections on the tail 11, by changing the range of motion wing 1, including the previous ones, and ending with the variables of all parameters, including the angles of attack α2 and β2 of wing 1. Current - target parameters P2 can be set proportionally for the entire cycle or freely varied within individual phases or their parts. Tables 7.0.1.3, 7.0.1.4 and 7.0.1.5 show the most practical operating modes, also many connected to each other but not all connected modes as there are practically an infinite number of them, especially since in the tables they are included roughly as a significant change to + or - or leaving a given parameter at 0. Sometimes small changes in the proportions of parameters can make significant differences in the effect of the system.

Fig. 7.0.1.3, Fig. 7.0.1.4 and Fig. 7.0.1.5 show the modes in double tables for each figure: in the first figure, the first table from the left contains unchanged speed V and ceiling L and the second table shows modes with different gear ratios, zero energy balance on the relative relations of the speed V to the flight ceiling L, the second drawing with the flight modes, the first table from the left shows the increased speed V and the preserved ceiling L, the second table of the second drawing contains relative transformations of these flight parameters based on subvariants of the modes from the first table and in the third drawing, similarly, only in the first table these basic operating modes have reduced speed and maintained altitude. The first mode, marked in the bold frame in Figure 7.0.1.3, has the initial parameters P1, while the subsequent modes are, to a greater or lesser extent, transformed to the target parameters P2.

For example, the base mode 0.0.0.2, which with zero energy balance, as indicated by the first number of the variant number, has the speed V and the ceiling L preserved thanks to the fact that within the first group of variants, separated by a thick line, there is only a change in the rate of rotation of the crank 5 resulting from for example, from the variable speed of operation of the engine 7, but may also result from the adjustable tensioner 14.4 and the setting of control surfaces on the tail 11 may be modified. And thanks to the variable pace, wing 1 is slowed down when lowering it and accelerated when raising, but in order to maintain the ceiling, it is necessary to tilt the nose of the fuselage 8 to "+" by appropriately setting the empennage 11. For example, this mode can be used to lower the ceiling with significant acceleration, which can be seen in the second table as 0.+.-.2V, this was obtained by modifying the 0.0.0.2 mode on tail with control surfaces 11, and the note "V" means particularly high speed.

The example presented in Fig. 7.0.1.4 offers the +.+.0.10 mode with the annotation P+ meaning special power and performance, in which, separated by the last line, all controllable parameters are modified to the plus, i.e. angles of attack α2 and β2 of the wing 1, work rate and range of motion wings 1. Due to the highest efficiency, this mode can be modified to +.+.-.10, i.e. vertical take-off or vertical soaring or hovering in the air, it can alternatively be used as +.+.+.10, i.e. increasing the V speed and ceiling L. The +.+.0.12 mode, which has the annotation V+, means a significant increase in speed and can be directly used to most effectively pull the aircraft out of a stall. A result similar to the above, but not to such an extent, can be obtained using the simple +.+.0.0 mode. Energy harvesting can be obtained from the modes included in the third figure with modes 7.0.1.5, for example using -.-.0.2, after pointing the nose down by setting tail 11 to "-", mode -.-.-.2 is obtained, which has the annotation CH, with a down arrow. This means that energy is gained in the medium at the expense of speed and altitude. Altitude can actually be maintained when carrying air currents are used to obtain energy. An even more effective mode for obtaining energy from the air stream is -.0.-.5E, but it is more complicated to implement because, apart from modifying the speed of operation of the wing 1 and switching the motor 7 to the generator mode and the controll surfaces angle 11, the range also changes movement of wing 1. For example, the modes -.-.0.17 and -.-.0.19 can be used for a particularly effective landing in place, also with obtaining energy from the system, but the method of obtaining energy presented in Fig. 7.0.1.2 is also reflected in mode -.0.-.15 in Fig. 7.0.1.5. Such a universal method of obtaining energy is to set the wing 1 in the position and work pace so that at least in one phase the air-driven wing 1 drives the system and in the other phase the energy expenditure is less than the energy obtained.

In the above cases, when the assumed effects are achieved by changing the angles of attack α2 and β2 of the wing 1, it is assumed that the driver 32 of the motor 7 automatically selects the work pace so that the lightly loaded motor 7 accelerates and the more heavily loaded one slows down.

The above examples describe the implementation of flight in the case of predictable conditions, i.e. when flight conditions, whether set or existing, change smoothly over many operation cycles of the wing 1. But they can be freely divided and combined also within individual cycles and their parts to obtain suitable flight under changing conditions or changing requirements. They can be obtained deterministically, as a diagnosis of the problem and response to the operating mode, or by ongoing control of parameters P1 and P2 and correction of negative factors, implemented using a deterministic algorithm, artificial intelligence or their combination.

Take-off and landing may also be carried out as part of the present invention or in combination with other methods of propulsion or braking, for example, take-off may be carried out using a rocket drive or any other propulsion, launcher or hand throw, and landing by using a parachute, rotor, or alternative drive. Independent take-off, while realistic, is in many cases wrong because the range of parameters during take-off differs so much from the parameters during flight that creating a universal solution would negatively affect work during a normal flight. Creating a dedicated launcher for unmanned aerial vehicles is a standard and recommended approach.

An example of a simple, comprehensive implementation can be one which control is based mainly on motor 7. The aircraft can be implemented in such a way that the angles α2 and β2 and the range of motion of wing 1 are roughly set, using, in addition to the base variant, for example variant 3 and 4, but it may also be variant 5 or 6 or a combination of these variants. An example of implementation may also be a combination of the base variant with the latest development variant, i.e. mechanism 12 with operating parameters defined by the geometry of the mechanism selected in such a way that at intermediate rotational speeds motor 7 obtains the correct solution for the assumed speeds, and as the air stream accelerates, wing 1 should accelerate and similarly when the air flow slows down, wing 1 should slow down. In order to obtain a proper translation of the work of the motor 7 into propulsion by the wing 1 in the air, in addition to the correctness of the angles of attack α2 and β2, minimum interrelated parameters must also be met, such as the span of the wing 1 with the bearing surface, the range of movement of the wing 1 and the frequency of movement of the wing 1.

All the above variants and sub-variants can be freely combined and divided into a complete implementation, and elements from one variant can be applied to another. For example, the entire aircraft can be made with a stabilizing wing 9 and added a stabilizer and aerodynamic brake 14.9 from variant 4, or an arrow 17.10 from the fifth variant controlling the angles of attack α2 and β2 by shifting the variable fulcrums 15.2, as part of an additional intermediate mechanism or additional intermediate drive 15. Moreover, the system can be controlled by the controller 21, which, through the motor 7, ensures optimization and special stabilization thanks to the motor 7 controller 32, but also the actuators 33 controlling the elasticity of the tensioners 17.4 of the stabilizing arrow 17.10.

### Application of the invention

Due to its properties, the ornithopter in question is particularly applicable in unmanned aircraft for any purpose, in particular for patrolling areas, repelling birds, and carrying loads.

## Claims

1. A drive of an aerodyne - (1) omithopter, cruising roughly in the horizontal direction (X), comprising at least a fuselage (8), motor (7) and wing (1) moved by a drive transmission mechanism (12), comprising (12) a wing beam (2) fixed to the wing (1), a lever (3) connected with an articulated joint (23) to the beam(2) and with a joint (24) to the fuselage (8), a connecting-rod (4) connected with an articulated joint (25) to a lever(3), a crank connected with an articulated joint (26) to the connecting-rod (4) and with a movable connection with an axle (27) to the motor (7) with a fixed connection (30) to the fuselage (8), a stick (6) connected with a joint (28) to the end of the crank (5) arm or to the connecting-rod (4) or to the fuselage (8) and connected with a joint (29) to the beam (2), in effect obtaining a bar mechanism (12) in the lateral plane (ZX), with the crank (5) movement in the vertical direction (Z) transmitted to a pendulous motion of the wing (1) around the joint (24) similar to shifting the wing (1) in the vertical direction (Z), and a horizontal (X) movement of the crank (5) transmitted to a change of angles of attack (α2, β2) of the wing (1), where the fuselage (8) may have fixed a stabilizing wing (9) and control surfaces (11).

2. A drive as claimed in claim 1, wherein the crank is movably connected with the axle (27) to a gear (13) and the gear (13) is movable connected with a joint (22) to the motor (7) and the gear (13) has a fixed connection (31) to the fuselage (8).

3. A drive as claimed in claim 1 or 2, wherein part or all rigid components of the drive transmission mechanism (12) are replaced with flexible components, and part or all movable connections (23,24,25,26,27,28,29) are replaced with fixed connections or flexible connections, and a device for adjusting the elasticity and working length (14) has been added to the components of the mechanism (12), thereby obtaining a system with an adjuster of angles of attack (α2, β2) and of the range of movement of the wing (1), which provides the possibility of operation with a varied and controllable distribution of forces and utilization of the work, and set by a stabilizer and aerodynamic brake (14.9) depending on the speed stabilizes pitch.

4. A drive as claimed in claim 1 or 2 or 3, wherein an additional intermediate mechanism or an additional intermediate drive (15) has been implemented, along with an additional stick (16) connected thereto (15) having a movable connection (28) to the end of the crank (5) arm or to the connecting-rod (4), with mechanical or electronic synchronization with the crank (5), so that the stick (6) has an articulated joint connection (28) to the additional intermediate mechanism (15) or the additional intermediate drive (15) and also is connected with an articulated joint (29) to the beam (2), resulting in a mechanism with an adjuster of angles of attack (α2,β2) of the wing (1).

5. A drive as claimed in claim 1 or 2 or 3 or 4, wherein the mechanism (12), the motor (7) and the gear (13) as a group or individually are connected to the fuselage (8) with connections (22, 24, 27, 28, 30, 31 or added) indirectly through a suspension (17), which can have a bob, suspension spring, damper, stabilizing arrow (17.10) and a parameter adjuster, or a wing (1) connected to a beam (2) indirectly through the suspension (17) which provides a system with an additional freedom of the wing (1) relative to the fuselage (8), which in the lateral plane (ZX) of the mechanism (12) influences the parameters of the wing (1) movement and stabilizes pitch (in the Y-axis), and the freedom in the frontal plane (YX) obtained by the suspension (17) provides the stability and manoeuvrability of the aircraft in roll (in the X-axis).

6. A drive as claimed in claim 1 or 2 or 3 or 4 or 5, wherein the crank (5) and joints (26, 28) are all or some of them replaced by a cam-guide or a system of guide wheels (18) and a chain or a belt (19) guided by the cam-guide or the system of guide wheels (18), providing a mechanism with analogous operation as the drives claimed in claims 1 or 2 or 3 or 4 or 5.

7. A drive as claimed in claim 1 or 2 or 3 or 4 or 5 or 6 with an added electronic flight control and stabilization system, comprising sensors (20) reading information on flight parameters and operation of primarily the motor (7), the mechanism (12), the wing (1), the gear (13), the suspension (17), the fuselage (8) and external factors, and an electronic controller (21) controlling with drivers (32) in particular the motor speed (7), control surfaces (11), the gear (13), the device for adjusting the elasticity and working length (14) of the mechanism (12) components, the additional intermediate mechanism or additional intermediate drive (15), the suspension (17), the cam-guide or the system of guide wheels (18), and a stabilizing wing (9) through actuators (33), which can contain sensors (20), while the motor (7) driver (32) also has an option of switching it (7) into inverted operation, that is to acquire energy.
